# EUROPEAN PATENT APPLICATION

(11) **EP 4 401 170 A1**
(43) Date of publication of application: **17.07.2024**
(21) Application number: 22934342.1
(22) Date of filing: 01.04.2022
(51) Int. Cl.: H01M 4/58

(54) **POSITIVE ELECTRODE ACTIVE MATERIAL, PREPARATION METHOD THEREFOR, AND POSITIVE ELECTRODE PLATE, SECONDARY BATTERY AND ELECTRICAL DEVICE COMPRISING SAME**

(71) Applicant: Contemporary Amperex Technology Co., Limited, Ningde, Fujian 352100 (CN)
(72) Inventor: YUAN, Tianci, Ningde, Fujian 352100 (CN); JIANG, Yao, Ningde, Fujian 352100 (CN); ZHANG, Xinxin, Ningde, Fujian 352100 (CN); OUYANG, Chuying, Ningde, Fujian 352100 (CN); WU, Lingjing, Ningde, Fujian 352100 (CN); CHEN, Shangdong, Ningde, Fujian 352100 (CN); KANG, Weibin, Ningde, Fujian 352100 (CN); WANG, Zhiqiang, Ningde, Fujian 352100 (CN); LIU, Shaojun, Ningde, Fujian 352100 (CN); DENG, Bin, Ningde, Fujian 352100 (CN)
(74) Representative: Kraus & Lederer PartGmbB
(86) International application number: PCT/CN2022/084923
(87) International publication number: WO 2023/184512

(57) **Abstract**

The present application provides a positive electrode active material, a method for the preparation thereof and a positive electrode plate, a secondary battery and an electrical device. The positive electrode active material having a core-shell structure, including a core and a shell cladding the core, the core has a chemical formula of LiₘAₓMn_{1-y}B_{y}P_{1-z}C_{z}O₄₋ₙDₙ, the shell includes a first cladding layer cladding the core, a second cladding layer cladding the first cladding layer and a third cladding layer cladding the second cladding layer, the first cladding layer includes crystalline pyrophosphates LiₐMP₂O₇ and/or M_{b}(P₂O₇)_{c}, the second cladding layer includes crystalline phosphate XPO₄, and the third cladding layer is carbon.The positive electrode active material of the present application enables the secondary battery and electrical device to have a relatively high energy density, and good cycling performance, rate performance and safety performance.

## Description

### TECHNICAL FIELD

The present application belongs to the technical field of batteries, in particular to a positive electrode active material, a method for the preparation thereof and a positive electrode plate, a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources. However, lithium manganese phosphate is prone to manganese ion leaching out during charging, resulting in rapid capacity decay. Therefore, it is necessary to provide a positive electrode active material with good overall performance.

### SUMMARY

An object of the present application is to provide a positive electrode active material, a method for the preparation thereof, and a positive electrode plate, a secondary battery and an electrical device comprising the same, which material enables the secondary battery and electrical device using the positive electrode active material to have a relatively high energy density, and good cycling performance, rate performance and safety performance.

A first aspect of the present application provides a positive electrode active material having a core-shell structure, comprising a core and a shell cladding the core, wherein the core has a chemical formula of LiₘAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and the shell comprises a first cladding layer cladding the core, a second cladding layer cladding the first cladding layer and a third cladding layer cladding the second cladding layer, wherein the first cladding layer comprises crystalline pyrophosphates LiₐMP₂O₇, and/or M_{b}(P₂O₇)_{c}, 0 ≤ a ≤ 2, 1 ≤ b ≤ 4, 1 ≤ c ≤ 6, wherein the values of a, b and c satisfy the condition that the crystalline pyrophosphate LiₐMP₂O₇, or M_{b}(P₂O₇)_{c} is electrically neutral; wherein each M in the crystalline pyrophosphates LiₐMP₂O₇ and/or M_{b}(P₂O₇)_{c} is independently one or more elements selected from Fe, Ni, Mg, Co, Cu, Zn, Ti, Ag, Zr, Nb, and Al; wherein the second cladding layer comprises crystalline phosphate XPO₄, X being one or more elements selected from Li, Fe, Ni, Mg, Co, Cu, Zn, Ti, Ag, Zr, Nb and Al; and wherein the third cladding layer is carbon.

The inventors have found, after extensive research, that by modifying lithium manganese phosphate and multilayer cladding of lithium manganese phosphate, a new type of positive electrode active material with a core-shell structure can be obtained, and the positive electrode active material can realize a significantly reduced leaching out of manganese ion and a reduced rate of lattice change, and its use in the secondary battery can improve the cycling performance, rate performance, and safety performance of the battery as well as increase the capacity of the battery.

The crystalline pyrophosphate in the first cladding layer has an interplanar spacing ranging from 0.293 nm to 0.470 nm, and a crystal orientation (111) angle ranging from 18.00° to 32.00°; and the crystalline phosphate in the second cladding layer has an interplanar spacing ranging from 0.244 nm to 0.425 nm, and a crystal orientation (111) angle ranging from 20.00° to 37.00°. As a result, the rate of lattice change of positive electrode active material and leaching out of manganese ion during the process of de-intercalation and intercalation of lithium can be effectively reduced, and thereby enhancing the high-temperature cycling performance and the high-temperature storage performance of the battery.

In some embodiments of the present application, x is selected from a range of 0.001 to 0.005. As a result, the dynamic performance of the positive electrode active material can be further improved.

In some embodiments of the present application, y is selected from a range of 0.01 to 0.5, optionally from 0.25 to 0.5. As a result, the specific capacity and rate performance of the positive electrode active material can be further improved.

In some embodiments of the present application, z is selected from a range of 0.001 to 0.005. As a result, the rate performance of the battery can be further improved.

In some embodiments of the present application, n is selected from a range of 0.001 to 0.005. As a result, the high-temperature stability of the battery can be further improved.

In some embodiments of the present application, (1-y):y is from 1 to 4, optionally from 1.5 to 3, and m:x is from 9 to 1100, optionally from 190 to 998. As a result, the energy density and cycling performance of the battery can be further improved.

In some embodiments of the present application, the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0. By selecting the morphology of the carbon in the carbon cladding layer, the overall electrochemical performance of the battery is thereby enhanced.

In some embodiments of the present application, the first cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core.

In some embodiments of the present application, the second cladding layer has a cladding amount of greater than 0 and less than or equal to 6 wt%, optionally greater than 0 and less than or equal to 5.5 wt%, and more optionally between 2 wt% and 4 wt%, based on the weight of the core.

In some embodiments of the present application, the third cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core.

In the positive electrode active material with a core-shell structure described in the present application, the cladding amount of the three cladding layers is preferably within the above range, whereby sufficiently cladding the core and at the same time further improving the dynamic performance, cycling performance and safety performance of the battery without sacrificing the specific capacity of the positive electrode active material.

In some embodiments of the present application, the first cladding layer has a thickness of 1 nm to 10 nm. As a result, it is possible to avoid an unfavorable effect on the dynamic performance of the positive electrode active material that may arise when thickness is too large, and it is possible to avoid a problem that may not be able to efficiently hinder the migration of the transition metal ions when the thickness is too small.

In some embodiments of the present application, the second cladding layer has a thickness of 2 nm to 15 nm. As a result, the interfacial side reaction can be effectively mitigated, thereby improving the high-temperature cycling performance and high-temperature storage performance of the battery.

In some embodiments of the present application, the third cladding layer has a thickness of 2 nm to 25 nm. As a result, the electrical conductivity of the positive electrode active material can be improved and the compaction density of the positive electrode plate prepared using the positive electrode active material can be improved.

In some embodiments of the present application, manganese is present in a content of 10 wt% to 35 wt%, optionally in the range of 15 wt% to 30 wt%, and more optionally in the range of 17 wt% to 20 wt%, and phosphorus is present in a content of 12 wt% to 25 wt%, optionally in the range of 15 wt% to 20 wt%, the based on the weight of the positive electrode active material; the weight ratio of manganese to phosphorus is in the range of 0.90 to 1.25, optionally in the range of 0.95 to 1.20. As a result, it can effectively avoid problems such as deterioration of the structural stability of the positive electrode active material and decrease in density that may be caused if the content of manganese is too large, so as to improve the performance of the battery in terms of cycling, storage and compaction density; and it can avoid problems such as a low voltage plateau that may be caused if the content of manganese is too small, so as to improve the energy density of the battery.

In some embodiments of the present application, each of A, C and D is independently any one element in the respective range, and B is at least two elements in its range.

Optionally, A is any one element selected from Mg and Nb.

Optionally, B is at least two elements selected from Fe, Ti, V, Co and Mg, optionally a combination of Fe with one or more element selected from Ti, V, Co and Mg.

Optionally, C is S.

Optionally, D is F.

As a result, it can improve rate performance, specific capacity and/or high-temperature stability of the battery.

In some embodiments of the present application, before and after complete de-intercalation and intercalation of lithium, the positive electrode active material has a lattice change rate of 8% or less, optionally 6% or less, more optionally 4% or less. Reducing the lattice change rate of the core will be favorable to enhance the Li⁺ transport ability, thereby improving the rate performance of the battery.

In some embodiments of the present application, the positive electrode active material has a Li/Mn anti-site defect concentration of 4% or less, optionally 2% or less, more optionally 1% or less. As a result, it is possible to avoid Mn²⁺ from hindering Li⁺ transmission, and at the same time enhance the specific capacity exertion and rate performance of the positive electrode active material.

In some embodiments of the present application, the positive electrode active material has a compaction density of 2.2 g/cm³ or more, optionally 2.2 g/cm³ or more and 2.8 g/cm³ or less, at 3T. As a result, it is beneficial to improving the volumetric energy density of the battery.

In some embodiments of the present application, the positive electrode active material has a surface oxygen valence of -1.90 or less, optionally -1.90 to -1.99. As a result, it is possible to alleviate the interfacial side reaction of the positive electrode active material and the electrolytic solution, thereby improving the cycling performance and high-temperature storage performance and the like of the battery.

A second aspect of the present application provides a positive electrode active material, comprising the following steps:
step of providing a core material having a chemical formula of LiₘAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of cladding: providing a suspension of LiₐMP₂O₇, and/or M_{b}(P₂O₇)_{c} and providing a suspension of XPO₄, adding the core material to the suspensions and mixing them, and obtaining the positive electrode active material by sintering, wherein 0 ≤ a ≤ 2, 1 ≤ b ≤ 4, 1 ≤ c ≤ 6, and the values of a, b and c satisfy the condition that the crystalline pyrophosphate LiₐMP₂O₇, or M_{b}(P₂O₇)_{c} is electrically neutral, and wherein each M is independently one or more elements selected from Fe, Ni, Mg, Co, Cu, Zn, Ti, Ag, Zr, Nb, and Al; and X is one or more elements selected from Li, Fe, Ni, Mg, Co, Cu, Zn, Ti, Ag, Zr, Nb and Al,
wherein the positive electrode active material has a core-shell structure comprising a core and a shell cladding the core, in which the shell comprises a first cladding layer cladding the core, a second cladding layer cladding the first cladding layer and a third cladding layer cladding the second cladding layer, wherein the first cladding layer comprises crystalline pyrophosphates LiₐMP₂O₇, and/or M_{b}(P₂O₇)_{c}, the second cladding layer comprises crystalline phosphate XPO₄, and the third cladding layer is carbon.

In some embodiments of the present application, the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₘAₓMn_{1-y}B_{y}P_{1-z}C_{z}O₄₋ₙDₙ.

In some embodiments of the present application, the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D. By selecting the source of each doped element, the uniform distribution of the doped element can be improved, so as to improve the performance of the positive electrode active material.

In some embodiments of the present application, the stirring in the step (1) is carried out at a temperature in a range of 60-120°C.

In some embodiments of the present application, the stirring in the step (1) is carried out by stirring at a rate of 200-800 rpm.

In some embodiments of the present application, grinding and mixing in the step (2) are carried out for 8-15 hours.

By controlling the reaction temperature, stirring rate and mixing time during doping, uniform distribution of doped elements and higher crystallinity of the core after sintering can be achieved, and thus the specific capacity and rate performance of the positive electrode active material can be improved.

In some embodiments of the present application, the sintering in the step (4) is carried out at a temperature in a range of 600-900°C for 6-14 hours. By controlling the sintering temperature and time, it is possible to control crystallinity of the material and reduce the amount of leaching out of Mn and Mn-site doping elements after cycling, thereby improving high-temperature stability and cycling performance of the battery.

In some embodiments of the present application, the cladding step comprises:
a first cladding step: dissolving a source of element M, a phosphorus source and an acid, and optionally a source of lithium, in a solvent to obtain a suspension of first cladding layer material; sufficiently mixing the core obtained in the step of providing a core material with the suspension of a first cladding layer material obtained in the first cladding step, drying, and sintering to obtain a material clad with the first cladding layer;
a second cladding step: dissolving a source of element X, a phosphorus source and an acid in a solvent to obtain a suspension of a second cladding layer material; sufficiently mixing the material clad with the first cladding layer obtained in the first cladding step with the suspension of a second cladding layer material obtained in the second cladding step, drying, and sintering to obtain a material clad with two cladding layers; and
a third cladding step: dissolving a carbon source in a solvent and fully dissolving it to obtain a solution of a third cladding layer material; then adding the material clad with two cladding layers obtained in the second cladding step to the solution of a third cladding layer, mixing homogeneously, drying and then sintering to obtain a material clad with three cladding layers, i.e., a positive electrode active material.

In some embodiments of the present application, in the first cladding step the pH of a solution with a source of elemental M, a phosphorus source and an acid, and optionally a lithium source dissolved, is controlled to be 3.5 to 6.5, and then stirred and reacted for 1 hour to 5 hours, and then the solution is warmed to 50°C to 120°C and maintained at that temperature for 2 hours to 10 hours.

In some embodiments of the present application, sintering in the first cladding step is carried out at 650°C to 800°C for 2 hours to 6 hours.

In some embodiments of the present application, in the second cladding step a source of element X, a phosphorus source and an acid are dissolved in a solvent and then stirred and reacted for 1 hour to 10 hours, and then the resulting solution is warmed to 60°C to 150°C and maintained at that temperature for 2 hours to 10 hours.

In some embodiments of the present application, the sintering in the second cladding step is carried out at 500°C to 700°C for 6 hours to 10 hours.

In some embodiments of the present application, the sintering in the third cladding step is carried out at 700°C to 800°C for 6 hours to 10 hours.

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 90 wt% to 99.5 wt%, based on total weight of the positive electrode film layer.

In some embodiments of the present application, the positive electrode active material is present in the positive electrode film layer in a content of 95 wt% to 99.5 wt%, based on total weight of the positive electrode film layer.

The positive electrode plate of the present application is used in a secondary battery, it can improve the energy density, cycling performance, rate performance and safety performance of the secondary battery.

A fourth aspect of the present application provides a secondary battery comprising the positive electrode active material of the first aspect of the present application, or the positive electrode active material prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application comprise the positive electrode active material of the present application, and thus have at least the same advantages as the positive electrode active material.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of a secondary battery according to an embodiment of the present application.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.
Fig. 7 illustrates an X-ray diffraction (XRD) of the undoped LiMnPO₄ and a core of the positive electrode active material prepared in Example 2.
Fig. 8 illustrates an X-ray energy dispersive spectroscopy (EDS) of a core of the positive electrode active material prepared in Example 2.

In the drawings, the accompanying drawings are not necessarily drawn to an actual scale. Among them, the reference sings in the drawings are illustrated as follows: 1 - battery pack, 2 - upper case body, 3 - lower case body, 4 - battery module, 5 - secondary battery, 51 - housing, 52 - electrode assembly, and 53- cover plate.

### DETAILED DESCRIPTION

Hereinafter, embodiments of the positive electrode active material, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

It should be noted that, as used herein, the term "cladding layer" refers to a layer of material cladding a core of lithium manganese phosphate, and the layer of material may completely or partially cover the core of lithium manganese phosphate. Use of the term "cladding layer" is used only for convenience of description and is not intended to limit the present invention. Alternatively, each cladding layer may be completely or partially cover the core. Similarly, the term "thickness of a cladding layer" refers to the thickness of a layer of material cladding a core of lithium manganese phosphate in the radial direction of the core of lithium manganese phosphate.

As used herein, an "about" value indicates a range of that the specified value ± 10%.

As used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

The inventors of the present application found in the actual operation that there is a serious leaching out of manganese ions during the deep charging and discharging of the lithium manganese phosphate positive electrode active material. Although the prior art has attempted to clad lithium manganese phosphate with lithium iron phosphate to reduce interfacial side reactions, such cladding cannot prevent the subsequent migration of the leached manganese ions into the electrolytic solution. The leached manganese ions are reduced to manganese metal after migration to the negative electrode. The produced metal manganese acts as a "catalyst", which can catalyze the decomposition of the SEI (solid electrolyte interphase) film on the surface of the negative electrode to produce a by-product. A part of the by-product is gas, which is prone to cause the battery to expand and affect the safety performance of the battery, and another part is deposited on the surface of the negative electrode, and blocks the channel of lithium ion in and out of the negative electrode, resulting in increased impedance of the battery and affecting the dynamic performance of the battery. In addition, in order to supplement the decomposed SEI film, the electrolytic solution and the active lithium ions in the battery are continuously consumed, which also has an irreversible impact on the capacity retention rate of the battery.

The inventors have found, after extensive research, that by modifying lithium manganese phosphate and by cladding the lithium manganese phosphate with multilayers, a new type of positive electrode active material with a core-shell structure can be obtained, and the positive electrode active material can realize a significantly reduced leaching out of manganese ion and a reduced rate of lattice change, and its use in the secondary battery can improve cycling performance, rate performance, and safety performance of the battery as well as increase the capacity performance of the battery. The use of the material in secondary battery can improve cycling performance, rate performance, safety performance and capacity of the battery.

### Positive electrode active material

A first aspect of the present application provides a new positive electrode active material having a core-shell structure, comprising a core and a shell cladding the core, wherein the core has a chemical formula of LiₘAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and the shell comprises a first cladding layer cladding the core, a second cladding layer cladding the first cladding layer and a third cladding layer cladding the second cladding layer, wherein the first cladding layer comprises crystalline pyrophosphates LiₐMP₂O₇, and/or M_{b}(P₂O₇)_{c}, 0 ≤ a ≤ 2, 1 ≤ b ≤ 4, 1 ≤ c ≤ 6, wherein the values of a, b and c satisfy the condition that the crystalline pyrophosphate LiₐMP₂C₇ or M_{b}(P₂O₇)_{c} is electrically neutral; wherein each M in the crystalline pyrophosphates LiₐMP₂O₇ and/or M_{b}(P₂O₇)_{c} is independently one or more elements selected from Fe, Ni, Mg, Co, Cu, Zn, Ti, Ag, Zr, Nb, and Al; wherein the second cladding layer comprises crystalline phosphate XPO₄, X being one or more elements selected from Li, Fe, Ni, Mg, Co, Cu, Zn, Ti, Ag, Zr, Nb and Al; and wherein the third cladding layer is carbon.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of x1, x2...... and xn must also fall within such numerical range of the present application. Similarly, in the case where B, C and D are more than two elements, the limitations on numerical ranges for the stoichiometric numbers of B, C and D in the present application also have the above meaning.

The core of the positive electrode active material of the present application is obtained by doping the compound LiMnPO₄ with various elements, wherein A, B, C and D are elements for doping at the Li, Mn, P and O sites of the compound LiMnPO₄, respectively. Without wishing to be bound by theory, it is now believed that the improvement of performances of lithium manganese phosphate is related to the reduction of the lattice change rate of lithium manganese phosphate in the process of de-intercalation and intercalation of lithium ions and the reduction of surface activity. The reduction of the lattice change rate can reduce the difference in lattice constants between two phases at the grain boundary, reduce the interfacial stress, enhance the Li⁺ transport at the interface, and thus improve the rate performance of the positive electrode active material. High surface activity tends to lead to serious interfacial side reactions, which intensify gas production, consumption of the electrolytic solution and interface damage, thus affecting the cycling performance of the battery. In this application, the lattice change rate is reduced by doping at Li and Mn sites. The Mn-site doping also effectively reduces the surface activity, thus inhibiting the leaching out of manganese ion and the interfacial side reactions between the positive electrode active material and the electrolytic solution. The P-site doping results in a faster change rate of Mn-O bond length and reduces migration barrier of small polaron of the positive electrode active material, thus contributing to the enhancement of electronic conductivity. The O-site doping has a good effect on reducing the interfacial side reactions. The doping at the P- and O-sites also has an effect on the leaching out of manganese ion of the anti-site defects and dynamic performance.

The inventors of the present application unexpectedly found that by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the gram capacity and compaction density of the positive electrode active material can also be improved. Optionally, A is one or more elements selected from Zn, Al, Na, K, Mg, Nb, Mo and W, B is one or more elements selected from Ti, V, Zr, Fe, Ni, Mg, Co, Ga, Sn, Sb, Nb and Ge, C is one or more elements selected from B (boron), S, Si and N, and D is one or more elements selected from S, F, Cl and Br.

In addition, the entire core system remains electrically neutral, which ensures that there are as few defects and heterogeneous phases in the positive electrode active material as possible. If there is an excessive amount of transition metal (e.g., manganese) in the positive electrode active material, due to the more stable structure of the material system itself, the excess transition metal is likely to precipitate in the form of monomers or form a heterogeneous phase inside the crystal lattice, and keeping the electro-neutrality can keep such heterogeneous phases as small as possible. Additionally, ensuring the system is electrically neutral can also lead to the creation of lithium vacancies in the positive electrode active material in some cases, which can lead to better dynamic performance of the positive electrodeactive material.

In the present application, since metal ions are difficult to migrate in the pyrophosphate, the pyrophosphate as the first cladding layer can effectively isolate the dopant metal ions from the electrolytic solution. The crystalline pyrophosphate has a stable structure, so the cladding with crystalline pyrophosphate can effectively inhibit the leaching out of the transition metal and improve the cycling performance.

The bonding between the first cladding layer and the core is similar to a heterojunction, and the firmness of the bonding is limited by the degree of lattice matching. When the lattice mismatch is below 5%, the lattice matching is better, and the two materials are easy to combine tightly. The tight bonding can ensure that the cladding layer will not fall off in the subsequent cycling process, which is conducive to ensuring the long-term stability of the positive electrode active material. The measurement of the degree of bonding between the first cladding layer and the core is mainly carried out by calculating the degree of mismatch between the core and the respective lattice constant of the cladding.

Crystalline phosphate is chosen as the second cladding layer, firstly, because it has a higher lattice matching with the first cladding layer of crystalline pyrophosphate (the mismatch is only 3%); secondly, the phosphate itself has a better stability than that of the pyrophosphate, and cladding the pyrophosphate with the phosphate is conducive to the improvement of the stability of the positive electrode active material. The crystalline phosphate has a stable structure, and has excellent ability to conduct lithium ions, so the use of crystalline phosphate for cladding can effectively reduce the interfacial side reaction between positive electrode active material and electrolytic solution, thus improving the high-temperature cycling performance and high-temperature storage performance of the battery. The lattice matching between the second cladding layer and the first cladding layer is similar to that of the bonding between the first cladding layer and the core as described above, and when the lattice mismatch is less than 5%, the lattice matching is better, and the two materilas are easy to be bonded tightly.

The main reason for using carbon as the third cladding layer is the better electronic conductivity of the carbon layer. Since electrochemical reactions occur when applied in the secondary battery, which require the participation of electrons, carbon with excellent electrical conductivity can be used to cover the positive electrode active material so as to increase the electron conduction between particles and between different locations on the particles. Therefore, cladding with carbon can effectively improve the electrical conductivity and desolventization of the positive electrode active material.

As a result, by simultaneously doping specific elements at the Li, Mn, P, and O sites of LiMnPO₄ with specific amounts, the lattice change rate and surface activity are reduced, thereby reducing migration barrier of lithium ion, improving the cycling performance, dynamic performance and safety performance of the battery. By cladding the core with a first cladding layer comprising crystalline pyrophosphate, the migration resistance of manganese ions can be further increased, reducing their leaching out, and reducing the content of surface heterolithium and the contact between the core and the electrolytic solution, thus reducing the interfacial side reaction, reducing the gas production, and improving the high-temperature storage performance, cycling performance and safety performance of the battery. By further cladding a crystalline phosphate with excellent lithium ion conductivity as a second cladding layer, the interfacial side reaction between the positive electrode active material and the electrolytic solution can be effectively reduced, thereby improving the high-temperature cycling and storage performance of the battery. By further cladding a carbon layer as a third cladding layer, the safety performance and dynamic performance of the battery can be further improved.

The average particle size of the core prepared in the presennt application ranges from 50 nm to 500 nm, and the Dv50 is from 200 nm to 300 nm. The primary particle size of the core is within the range of 50 nm to 500 nm, and the Dv50 is from 200 nm to 300 nm. If the average particle size of the core is too large (more than 500 nm), the specific capacity exertion of the battery using the material will be affected; if the average particle size of the core is too small, it has a large specific surface area and is prone to agglomeration, making it difficult to achieve uniform cladding.

Through process control (e.g., sufficient mixing and grinding of materials from various sources), it is possible to ensure that the elements are uniformly distributed in the crystal lattice without agglomeration. After preparing the positive electrode active material according to the present application, the inventors cut the middle region (the inner core region) of the prepared positive electrode active material particles by a focused ion beam (referred to as FIB), and tested it by a transmission electron microscope (referred to as TEM) as well as an X-ray energy dispersive spectrometer (referred to as EDS), and found that the distribution of the various elements was uniform, and that aggregation did not occur. At the same time, the core of the positive electrode active material of the present application has basically same primary characteristic peaks at position to undoped LiMnPO₄, indicating that the core of the doped lithium manganese phosphate positive electrode active material has no impurity phase and the improvement of battery performances is mainly caused by doping of elements rather than by an impurity phase.

In the present application, "crystalline" means having a degree of crystallinity of 50% or more, i.e., 50% to 100%. A crystallinity of less than 50% is referred to as the glassy (or amorphous) state. The crystalline pyrophosphate and crystalline phosphate described in the present application have a crystallinity from 50% to 100%. Pyrophosphate and phosphate with a certain degree of crystallinity are not only conducive to giving full play to the functions of the pyrophosphate cladding layer in hindering the leaching out of manganese ions and the excellent lithium ion conductivity of the phosphate cladding layer, and reducing the interfacial side reactions, but also enable better lattice matching of the pyrophosphate coatinng layer and the phosphate cladding layer so that a closer bonding of the cladding layers is achieved.

In the present application, the crystallinity of crystalline pyrophosphate as the material for the first cladding layer and crystalline phosphate as the material for the second cladding layer of the positive electrode active material can be tested by conventional technical means in the field, for example, by density method, infrared spectroscopy, differential scanning calorimetry, and nuclear magnetic resonance absorption method, and can also be tested, for example, by X-ray diffraction method.

A specific method for testing the crystallinity of crystalline pyrophosphate as the material for the first cladding layer and crystalline phosphate as the material for the second cladding layer of the positive electrode active material by the X-ray diffraction method may comprise the steps of taking a certain amount of the positive electrode active material powder and measuring the total scattering intensity by X-rays, which is the sum of the scattering intensities of the entire space substance, and is only related to the intensity of the primary rays, the chemical structure of the positive electrode active material powder, the total electron number (i.e., the mass), and not with the ordinal state of the sample; and then separating the crystalline scattering from the amorphous scattering, and the degree of crystallinity, i.e., the ratio of the scattering of the crystalline portion to the total intensity of the scattering.

It should be noted that in the present application, the crystallinity of the pyrophosphate and phosphate in the cladding layer can be adjusted, for example, by adjusting the process conditions of the sintering process such as the sintering temperature, the sintering time and the like.

In some embodiments, the primary particles of the positive electrode active material have an average particle size in the range of 50 nm to 500 nm, with a median particle size Dv50 in the range of 200 nm to 300 nm. Since the particles will agglomerate, the actual measured size of the secondary particles after agglomeration may be from 500 nm to 40,000 nm.The size of the particles of the positive electrode active material affects the processing of the material and the compaction density performance of the electrode plate. By selecting the average particle size of the primary particles to be within the above range, it is thereby possible to effectively avoid the following: the average particle size of the primary particles of the positive electrode active material being too small, which may cause agglomeration of the particles and make the particles difficult to be dispersed, and which requires a higher amount of binder, resulting in a poorer brittleness of the electrode plate; and the average particle size of the primary particles of the positive electrode active material being too large, which may result in larger inter-particle gaps and a lower compaction density.

By the above solution, the lattice change rate of lithium manganese phosphate and manganese ion's leaching out in the process of de-intercalation and intercalation of lithium can be effectively suppressed, thereby enhancing the high-temperature cycling performance and high-temperature storage performance of the battery.

In some embodiments, each of A, C and D is independently any one element in the respective range, and B is at least two elements in its range. This enables easier and more accurate control of the composition of the core of the positive electrode active material.

Optionally, A is any one element selected from Mg and Nb.

Optionally, B is at least two elements selected from Fe, Ti, V, Co and Mg, optionally a combination of Fe with more than one element selected from Ti, V, Co and Mg.

Optionally, C is S.

Optionally, D is F.

By selecting the Li-site doping element within the above range, the lattice change rate during the de-intercalation process can be further reduced, thereby further improving the rate performance of the battery. By selecting the Mn-site doping element in the above range, the electronic conductivity can be further improved and the lattice change rate can be further reduced, thus improving the rate performance and specific capacity of the battery. By selecting the P-site doping element in the above range, the rate performance of the battery can be further improved. By selecting the O-site doping element in the above range, the side reactions at the interface can be further reduced and the high-temperature stability of the battery can be improved.

m is selected from the range of 0.9 to 1.1, such as 0.97, 0.977, 0.984, 0.988, 0.99, 0.991, 0.992, 0.993, 0.994, 0.995, 0.996, 0.997, 0.998 and 1.01.

x is selected from the range of 0.001 to 0.1, such as 0.001 and 0.005.

y is selected from the range of 0.001 to 0.5, such as 0.001, 0.005, 0.02, 0.05, 0.1, 0.15, 0.2, 0.25, 0.3, 0.34, 0.345, 0.349, 0.35 and 0.4.

z is selected from the range of 0.001 to 0.1, such as 0.001, 0.005, 0.08 and 0.1.

n is selected from the range of 0.001 to 0.1, such as 0.001, 0.005, 0.08 and 0.1.

In some embodiments, x is selected from the range of 0.001 to 0.005.

In some embodiments, y is selected from the range of 0.01 to 0.5, optionally the range of 0.25 to 0.5.

In some embodiments, z is selected from the range of 0.001 to 0.005.

In some embodiments, n is selected from the range of 0.001 to 0.005.

The dynamic performance of the positive electrode active material can be further enhanced by selecting the x value within the above range. The specific capacity and rate performance of the positive electrode active material can be further enhanced by selecting the y value within the above range. The rate performance of the battery can be further improved by selecting the z value within the above range. The high-temperature stability of the battery can be further improved by selecting the n value within the above range.

In some embodiments of the present application, the core of the positive electrode active material satisfies the ratio of (1-y):y within the range of 1 to 4, optionally in the range of 1.5 to 3, and the ratio of m:x within the range of 9 to 1100, optionally the range of 190 to 998. Here y denotes the sum of the stoichiometric numbers of the Mn-site doping elements. The energy density and cycling performance of the battery can be further improved when the above conditions are satisfied.

In some embodiments, the crystalline pyrophosphate in the first cladding layer has an interplanar spacing ranging from 0.293 nm to 0.470 nm, and a crystal orientation (111) angle ranging from 18.00° to 32.00°; the crystalline phosphate in the second cladding layer has an interplanar spacing ranging from 0.244 nm to 0.425 nm, and a crystal orientation (111) angle ranging from 20.00° to 37.00°.

Both the first cladding layer and the second cladding layer in the positive electrode active material described in the present application use crystalline substances. The crystalline pyrophosphate and crystalline phosphate in the cladding layer can be characterized by means of conventional means in the art, for example, with the aid of transmission electron microscopy (TEM). Under TEM, the core and the cladding layer can be distinguished by testing the interplanar spacing.

The specific test method for the interplanar spacing and angle of crystalline pyrophosphate and crystalline phosphate in the cladding layer may include the following steps: taking a certain amount of the sample powder of the coated positive electrode active material in a test tube and injecting a solvent, such as alcohol, into the test tube, then carrying out sufficient stirring and dispersion, then taking an appropriate amount of the above solution with a clean disposable plastic pipette and adding it dropwise to a 300-mesh copper mesh, with part of the powders on the copper mesh, and transferring the copper mesh with the sample to the TEM sample chamber for testing to obtain the original picture of the TEM test. The original picture obtained from the above TEM test was opened in the diffractometer software for the Fourier transformation to obtain the diffraction pattern, and the distance from the diffracted spot to the center position in the diffraction pattern was measured to obtain the interplanar spacing, and the angle may be calculated according to Bragg's equation.

The difference between the range of the interplanar spacing of the crystalline pyrophosphate and that of the crystalline phosphate can be directly judged by the value of the interplanar spacing.

Crystalline pyrophosphate and crystalline phosphate having interplanar spacing and angle within the above range can more effectively reduce the lattice change rate of the positive electrode active material and the leaching out of manganese ions in the process of de-intercalation and intercalation of lithium, thereby enhancing the high-temperature cycling performance and high-temperature storage performance of the battery.

In some embodiments, the carbon of the third cladding layer is a mixture of SP2 carbon and SP3 carbon; optionally, the molar ratio of the SP2 carbon to the SP3 carbon is any value in the range of 0.1 to 10, optionally any value in the range of 2.0 to 3.0.

In some embodiments, the molar ratio of the SP2 carbon to the SP3 carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or any value within any of the above ranges.

By selecting the morphology of the carbon in the carbon cladding layer, the overall electrochemical performance of the battery is thereby enhanced. Specifically, by using a mixed morphology of SP2 carbon and SP3 carbon and limiting the ratio of the SP2 carbon to the SP3 carbon to a certain range, the following can be effectively avoided: if the carbon in the cladding layer is all in the amorphous SP3 morphology, the electrical conductivity is poor, and if it is all in the graphitized SP2 morphology, although the electrical conductivity is good, there are few lithium ion pathways, which is not conducive to the de-intercalation of lithium ion. In addition, limiting the molar ratio of the SP2 carbon to the SP3 carbon to the above range achieves good electrical conductivity and ensures the lithium ion pathway, and is therefore conducive to improving the dynamic performance and cycling performance of the battery.

The mixing ratio of the SP2 morphology and the SP3 morphology of the carbon for the third cladding layer can be controlled by sintering conditions such as sintering temperature and sintering time. For example, in the case where sucrose is used as a carbon source to prepare the third cladding layer, the sucrose is cracked at a high temperature and then deposited on the second coatiing layer while at the same time under the action of high temperature, a carbon claddinging layer with both the SP3 morphology and the SP2 morphology is produced.The ratio of the SP2 carbon to the SP3 carbon may be regulated by selecting the high temperature cracking conditions and the sintering conditions.

The structure and characterization of the carbon for the third cladding layer can be determined by Raman spectroscopy as follows: the molar ratio of the SP2 carbon to the SP3 carbon is confirmed by splitting the energy spectrum of the Raman test to obtain I_{d}/I_{g} (I_{d} is the intensity of the peak of the carbon in the SP3 morphology and I_{g} is the intensity of the peak of the carbon in the SP2 morphology).

In some embodiments, the first cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core.

In some embodiments, the second cladding layer has a cladding amount of greater than 0 and less than or equal to 6 wt%, optionally greater than 0 and less than or equal to 5.5 wt%, and more optionally between 2 wt% and 4 wt%, based on the weight of the core.

In some embodiments, the third cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core.

In the present application, each layer has a non-zero cladding amount.

In the positive electrode active material with a core-shell structure described in the present application, the cladding amount of the three cladding layers is preferably within the above range, whereby sufficiently cladding the core and at the same time further improving the dynamic performance, cycling performance and safety performance of the battery without sacrificing the specific capacity of the positive electrode active material.

For the first cladding layer, by controlling the cladding amount within the above range, the following situations can be effectively avoided: if the cladding amount is too small, the thickness of the cladding layer is relatively thin, which may not be able to effectively hinder the migration of the transition metal; and if the cladding amount is too large, the cladding layer is too thick, which may affect the migration of Li⁺, and thus affect the rate performance of the positive electrode active material.

For the second cladding layer, by controlling the cladding amount within the above range, the following situations can be effectively avoided: if the cladding amount is too much, the overall platform voltage of the positive electrode active material may be affected; and if the cladding amount is too little, it may not be able to realize a sufficient cladding effect.

For the third cladding layer, the carbon cladding mainly serves to enhance the electron transfer between the particles, however, since the structure also contains a large amount of amorphous carbon, the density of the carbon is relatively low, and therefore, if the cladding amount is too large, the compaction density of the electrode plate may be affected.

In some embodiments, the first cladding layer has a thickness of 1 nm to 10 nm.

In some embodiments, the second cladding layer has a thickness of 2 nm to 15 nm.

In some embodiments, the third cladding layer has a thickness of 2 nm to 25 nm.

In some embodiments, the first cladding layer may have a thickness of about 2 nm, about 3 nm, about 4 nm, about 5 nm, about 6 nm, about 7 nm, about 8 nm, about 9 nm, or about 10 nm, or in any range of any of the above values.

In some embodiments, the second cladding layer may have a thickness of about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or in any range of any of the above values.

In some embodiments, the third cladding layer may have a thickness of about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of the above values.

When the thickness of the first cladding layer is within the range of 1 nm to 10 nm, it is possible to avoid an unfavorable effect on the dynamic performance of the positive electrode active material that may arise when it is too thick, and it is possible to avoid a problem that may not be able to efficiently hinder the migration of the transition metal ions when it is too thin.

When the thickness of the second cladding layer is within the range of 2 nm to 15 nm, the surface structure of the second cladding layer is stable, and the side reaction with the electrolytic solution is small, and thus the interfacial side reaction can be effectively mitigated, thereby improving the high-temperature cycling performance and high-temperature storage performance of the battery.

When the thickness of the third cladding layer is within the range of 2 nm to 25 nm, the electrical conductivity of the positive electrode active material can be improved and the compaction density of the positive electrode plate prepared using the positive electrode active material can be improved.

The test for the thickness of the cladding layer is mainly carried out by FIB, and the specific method may comprise the following steps: randomly selecting a single particle from the positive electrode active material powder to be tested, cutting a thin slice with a thickness of about 100 nm from the middle position of the selected particle or from the vicinity of the middle position, and then carrying out a TEM test on the thin slice, measuring the thickness of the cladding layer at 3-5 positions, and taking the average value.

In some embodiments, manganese is present in a content of 10 wt% to 35 wt%, optionally in the range of 15 wt% to 30 wt%, and more optionally in the range of 17 wt% to 20 wt%, based on the weight of the positive electrode active material.

In some embodiments, phosphorus is present in a content of 12 wt% to 25 wt%, optionally in the range of 15 wt% to 20 wt%, based on the weight of the positive electrode active material.

In some embodiments, the weight ratio of manganese to phosphorus is in the range of 0.90 to 1.25, optionally in the range of 0.95 to 1.20.

In the present application, where only the core of the positive electrode active material contains manganese, the content of manganese may correspond to that in the core.

In the present application, limiting the content of manganese to the above range can effectively avoid problems such as deterioration of the structural stability of the positive electrode active material and decrease in density that may be caused if the content of manganese is too large, so as to improve the performance of the battery in terms of cycling, storage and compaction density; and it can avoid problems such as a low voltage plateau that may be caused if the content of manganese is too small, so as to improve the energy density of the battery.

In the present application, limiting the content of phosphorus to the above range can effectively avoid the following situations: if the content of phosphorus is too large, it may lead to the covalency of P-O being too strong and affect the conductivity of the small polarizers, thus affecting the electrical conductivity of the positive electrode active material; and if the content of phosphorus is too small, it may cause the lattice structure of the core, of the pyrophosphate in the first cladding layer and/or of the phosphate in the second cladding layer to be less stable, thereby affecting the overall stability of the positive electrode active material.

The weight ratio of the manganese content to the phosphorus content has the following effects on the performance of the battery: if the weight ratio is too large, it means that there is too much manganese, and increased leaching out of manganese ion, which affects the stability and specific capacity exertion of the positive electrode active material, and thus affects the cycling performance and the storage performance of the battery; and if the weight ratio is too small, it means that there is too much phosphorus, which is prone to form a heterogeneous phase, causing decreased discharge voltage plateau of the positive electrode active material, thus reducing the energy density of the battery.

The measurement of the elemental manganese and the elemental phosphorus may be carried out by technical means conventional in the art. In particular, the content of the manganese element and the phosphorus element is measured using the following method: the positive electrode active material is dissolved in dilute hydrochloric acid (concentration 10-30%), the content of each element of the solution is tested using ICP, and then the content of the manganese element is measured and converted to obtain its weight percentage.

In some embodiments, the positive electrode active material has a lattice change rate of 8% or less, optionally 6% or less, more optionally 4% or less before and after complete de-intercalation and intercalation of lithium.

The de-intercalation and intercalation of lithium in manganese phosphate (LiMnPO₄) is a two-phase reaction. The interfacial stress of the two phases is determined by the level of the lattice change rate before and after the de-intercalation and intercalation of lithium, and the smaller the lattice change rate is, the smaller the interfacial stress is, and the easier the Li⁺ transport is. Therefore, reducing the lattice change rate of the core will be favorable to enhance the Li⁺ transport ability, thereby improving the rate performance of the battery. The positive electrode active material described in the present application is capable of realizing a lattice change rate of 8% or less before and after the de-intercalation and intercalation of lithium, and thus the use of the positive electrode active material is capable of improving the rate performance of the battery. The lattice change rate can be measured by methods known in the art, such as X-ray diffraction (XRD) pattern.

In some embodiments, the positive electrode active material has a Li/Mn anti-site defect concentration of 4% or less, optionally 2% or less, more optionally 1% or less.

The term Li/Mn anti-site defect refers to interchange of Li⁺ with Mn²⁺ in terms of its site in the LiMnPO₄ lattice. Accordingly, the Li/Mn anti-site defect concentration refers to a percentage of Li⁺ interchanged with Mn²⁺ relative to the total amount of Li⁺. The Li/Mn anti-site defect concentration in the present application may, for example, be tested according to JIS K 0131-1996.

The positive electrode active material described in the present application is capable of realizing the lower Li/Mn anti-site defect concentration described above. Although the mechanism is not yet well understood, the inventors of the present application speculate that since Li⁺ and Mn²⁺ will swap positions in the LiMnPO₄ lattice, and the Li⁺ transport channel is a one-dimensional channel, Mn²⁺ will be difficult to migrate in the Li⁺ channel, which in turn hinders the Li⁺ transport. As a result, the positive electrode active material described in the present application is able to avoid Mn²⁺ from hindering Li⁺ transmission and at the same time enhance the specific capacity exertion and rate performance of the positive electrode active material due to the low concentration of Li/Mn anti-site defects, which is within the above range.

In some embodiments, the positive electrode active material has a compaction density of 2.2 g/cm³ or more, optionally 2.2 g/cm³ or more and 2.8 g/cm³ or less, at 3T (tonne). The higher the compaction density is, the greater the weight of the active material per unit volume is. Thus, increasing the compaction density is conducive to improving volumetric energy density of the battery. Compaction density can be measured according to GB/T 24533-2009.

In some embodiments, the positive electrode active material has a surface oxygen valence of - 1.90 or less, optionally -1.90 to -1.99.

The stable valence of oxygen is originally -2, and the closer the valence state is to -2, the stronger the ability of gaining electrons, i.e., the stronger the oxidizability, and usually, the surface valence is -1.7 or less. By limiting the surface oxygen valence of the positive electrode active material to the above range as described above, it is able to mitigate the interfacial side reaction between the positive electrode active material and the electrolytic solution, thereby improving the cycling performance and the high-temperature storage performance and the like of the battery.

The surface oxygen valence state can be measured by methods known in the art, such as by electron energy loss spectroscopy (EELS).

### Preparation method

A second aspect of the present application provides a method for preparing the positive electrode active material, comprising the following steps:
step of providing a core material having a chemical formula of LiₘAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of cladding: providing a suspension of LiₐMP₂O₇ and/or M_{b}(P₂O₇)_{c} and provding a suspension of XPO₄ , adding the core material to the suspensions and mixing them, and obtaining the positive electrode active material by sintering, wherein 0 ≤ a ≤ 2, 1 ≤ b ≤ 4, 1 ≤ c ≤ 6, and the values of a, b and c satisfy the condition that the crystalline pyrophosphate LiₐMP₂O₇, or M_{b}(P₂O₇)_{c} is electrically neutral, and wherein each M is independently one or more elements selected from Fe, Ni, Mg, Co, Cu, Zn, Ti, Ag, Zr, Nb, and Al; and X is one or more elements selected from Li, Fe, Ni, Mg, Co, Cu, Zn, Ti, Ag, Zr, Nb and Al,
wherein the positive electrode active material has a core-shell structure comprising a core and a shell cladding the core, in which the shell comprises a first cladding layer cladding the core, a second cladding layer cladding the first cladding layer and a third cladding layer cladding the second cladding layer, and in which the first cladding layer comprises crystalline pyrophosphates LiₐMP₂O₇ and/or M_{b}(P₂O₇)_{c}, the second cladding layer comprises crystalline phosphate XPO₄, and the third cladding layer is carbon.

In some embodiments, optionally, the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₘAₓMn_{1-y}B_{y}P_{1-z}C_{z}O₄₋ₙDₙ.

In some embodiments, the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D. By selecting the source of each doped element, the uniform distribution of the doped element can be improved, so as to improve the performance of the positive electrode active material.

In some embodiments, the acid is one or more selected from hydrochloric acid, sulfuric acid, nitric acid, phosphoric acid, organic acids such as oxalic acid, and the like, for example oxalic acid. In some embodiments, the acid is a diluted acid with a concentration of 60 wt% or less.

In some embodiments, the manganese source may be a manganese-containing substance known in the art that can be used to prepare lithium manganese phosphate. For example, the manganese source may be one or more selected from elemental manganese, manganese dioxide, manganese phosphate, manganese oxalate, and manganese carbonate.

In some embodiments, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

In some embodiments, the solvents in step (1) and step (2) may each independently be solvents routinely used by those skilled in the art in the preparation of manganese salts and lithium manganese phosphate, and for example, they may each independently be selected from at least one of ethanol, water (such as deionized water), and the like.

In some embodiments, stirring in step (1) is carried out at a temperature in the range of 60-120°C. In some embodiments, stirring in step (1) is carried out at a rate of 200-800 rpm, or 300-800 rpm, or 400-800 rpm. In some embodiments, stirring in step (1) is carried out for 6-12 hours.

In some embodiments, grinding and mixing in step (2) are carried out for 8-15 hours.

By controlling the reaction temperature, stirring rate and mixing time during doping, uniform distribution of doping elements and higher crystallinity of materials after sintering can be achieved, which can enhance specific capacity and rate performance of the positive electrode active material.

In some embodiments, the filter cake in step (1) may be washed prior to drying the filter cake.

In some embodiments, drying in step (1) may be performed in a manner and under a condition known to those skilled in the art. For example, the drying may be carried out at a temperature in the range of 120-300°C. Optionally, the filter cake may be ground into particles after drying, for example, into particles having a median particle size Dv₅₀ in the range of 50-200 nm.

In some embodiments, the temperature and time of spray drying in step (3) may be the temperature and time routinely used in the art for performing spray drying, e.g., 1-6 hours at 100-300°C.

In some embodiments, sintering in step (4) is carried out at a temperature in the range of 600-900°C for 6-14 hours. By controlling the sintering temperature and time, it is possible to control crystallinity of the material and reduce the amount of leaching out of Mn and Mn-site doping elements after cycling, thereby improving high-temperature stability and cycling performance of the battery.

In some embodiments, sintering in step (4) is carried out under a protective atmosphere, wherein the protective atmosphere may be nitrogen, inert gas, hydrogen or a mixture thereof.

In some embodiments, the cladding step comprises:
a first cladding step: dissolving a source of element M, a phosphorus source and an acid, and optionally a source of lithium, in a solvent to obtain a suspension of a first cladding layer material; sufficiently mixing the core obtained in the step of providing a core material with the suspension of a first cladding layer material obtained in the first cladding step, drying, and sintering to obtain a material clad with the first cladding layer;
a second cladding step: dissolving a source of element X, a phosphorus source and an acid in a solvent to obtain a suspension of a second cladding layer material; sufficiently mixing the material clad with the first cladding layer obtained in the first cladding step with the suspension of a second cladding layer material obtained in the second cladding step, drying, and sintering to obtain a material clad with two cladding layers; and
a third cladding step: dissolving a carbon source in a solvent and fully dissolving it to obtain a solution of a third cladding layer material; then adding the material clad with two cladding layers obtained in the second cladding step to the solution of a third cladding layer, mixing homogeneously, drying and then sintering to obtain a material clad with three cladding layers.

In some embodiments, the source of element M is one or more of monomers, carbonates, sulfates, chlorates, nitrates, organic acids, oxides, hydroxides of one or more of the respective elements selected from Fe, Ni, Mg, Co, Cu, Zn, Ti, Ag, Zr, Nb, and Al.

In some embodiments, the source of element X is one or more of monomers, carbonates, sulfates, chlorates, nitrates, organic acids, oxides, hydroxides of one or more of the respective elements Li, Fe, Ni, Mg, Co, Cu, Zn, Ti, Ag, Zr, Nb, and Al.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

In some embodiments, the acid is one or more selected from hydrochloric acid, sulfuric acid, nitric acid, phosphoric acid, organic acids such as oxalic acid, and the like, for example oxalic acid. In some embodiments, the acid is a diluted acid with a concentration of 60 wt% or less.

In some embodiments, the carbon source is one or more of starch, sucrose, glucose, polyvinyl alcohol, polyethylene glycol, and citric acid.

In some embodiments, in the first cladding step, the pH of the solution of the source dissolved with element M, the phosphorus source and acid, and optionally the lithium source, is controlled to be 3.5 to 6.5, and then stirred and reacted for 1 hour to 5 hours, and then the solution is warmed up to 50°C to 120°C, and maintained at that temperature for 2 hours to 10 hours. In some embodiments, sintering is carried out at 650°C to 800°C for 2 hours to 6 hours in the first cladding step.

Optionally, in the first cladding step, the reaction is fully carried out. Optionally, in the first cladding step, the reaction proceeds for about 1.5 hours, about 2 hours, about 3 hours, about 4 hours, about 4.5 hours, or about 5 hours. Optionally, the reaction time of the reaction in the first cladding step may be within any range of any of the above values.

Optionally, in the first cladding step, the solution pH is controlled to be from 4 to 6.

Optionally, in the first cladding step, the solution is warmed to about 55°C, about 60°C, about 70°C, about 80°C, about 90°C, about 100°C, about 110°C, or about 120°C and held at that temperature for about 2 hours, about 3 hours, about 4 hours, about 5 hours, about 6 hours, about 7 hours, about 8 hours , about 9 hours, or about 10 hours; optionally, the temperature at which the warming occurs and the holding time in the first cladding step may be within any range of any of the above values.

Optionally, in the first cladding step, the sintering may be carried out at about 650°C, about 700° C, about 750° C, or about 800° C. for about 2 hours, about 3 hours, about 4 hours, about 5 hours, or about 6 hours; optionally, the sintering temperature and the sintering time, may be within any range of any of the above values.

In the first cladding step, by controlling the sintering temperature and time within the above range, the following can be effectively avoided: if the sintering temperature is too low and the sintering time is too short in the first cladding step, it will result in the first cladding layer having a low degree of crystallinity and more amorphous matter, which will lead to a decrease in the effect of inhibiting the leaching out of metals, thereby affecting the cycling performance and the high-temperature storage performance of the battery; if the sintering temperature is too high, it will lead to the appearance of heterogeneous phases in the first cladding layer, which will also affect its effect of inhibiting leaching out of metals, thereby affecting the cycling performance and high-temperature storage performance and the like of the battery; and if the sintering time is too long, it will increase the thickness of the first cladding layer, affecting the migration of Li⁺, thereby affecting the specific capacity exertion and the rate performance and the like of the positive electrode active material.

In some embodiments, in the second cladding step, the source of element X, the phosphorus source and the acid are dissolved in a solvent, then stirred and reacted for 1 hour to 10 hours, and then the solution is warmed up to 60°C to 150° C. and maintained at that temperature for 2 hours to 10 hours. In some embodiments, the sintering in the second cladding step is carried out at 500°C to 700°C for 6 hours to 10 hours.

Optionally, in the second cladding step, the reaction is fully carried out. Optionally, in the second cladding step, the reaction proceeds for about 1.5 hours, about 2 hours, about 3 hours, about 4 hours, about 4.5 hours, about 5 hours, about 6 hours, about 7 hours, about 8 hours, about 9 hours, or about 10 hours. Optionally, the reaction time in the second cladding step may be within any range of any of the above values.

Optionally, in the second cladding step, the solution is warmed to about 65°C, about 70°C, about 80°C, about 90°C, about 100°C, about 110°C, about 120°C, about 130°C, about 140°C, or about 150°C and maintained at that temperature for about 2 hours, about 3 hours, about 4 hours, about 5 hours, about 6 hours, about 7 hours, about 8 hours, about 9 hours, or about 10 hours; optionally, the temperature at which the warming occurs and the holding time in the second cladding step may be within any range of any of the above values.

In the step of providing the core material and in the first cladding step and the second cladding step, prior to sintering, i.e., in the preparation of the core material in which the chemical reaction takes place as well as in the preparation of the first cladding layer suspension and the second cladding layer suspension, it is possible to efficiently avoid the following by selecting the appropriate reaction temperatures and the reaction times, as described above: if the reaction temperature is too low, the reaction cannot occur or the reaction rate is slow; if the temperature is too high, the product decomposes or a heterogeneous phase is formed; if the reaction time is too long, the particle size of the product is large, which may increase the time and difficulty of the subsequent process; and if the reaction time is too short, then the reaction is incomplete and less product is obtained.

Optionally, in the second cladding step, the sintering may be carried out at about 550°C, about 600°C, or about 700°C for about 6 hours, about 7 hours, about 8 hours, about 9 hours, or about 10 hours; optionally, the sintering temperature and the sintering time may be in any range of any of the above values.

In the second capping step, by controlling the sintering temperature and time within the above range, the following can be effectively avoided: if the sintering temperature is too low and the sintering time is too short in the second cladding step, it will result in the second cladding layer having a low degree of crystallinity, more amorphous states, and a decline in its performance of lowering the surface reactive activity of the positive electrode active material, thereby affecting the cycling performance and high-temperature storage performance and the like of the battery; if the sintering temperature is too high, it will lead to the appearance of heterogeneous phases in the second cladding layer, which will also affect its effect of lowering the surface reaction activity of the positive electrode active material, thereby affecting the cycling performance and the high-temperature storage performance and the like of the battery; and if the sintering time is too long, it will lead to an increase in the thickness of the second cladding layer, which will affect the voltage plateau of the positive electrode active material, thereby causing a decreased energy density and the like of the battery.

In some embodiments, the sintering in the third cladding step is carried out at 700° C to 800° C for 6 hours to 10 hours. Optionally, in the third cladding step, the sintering may be performed at about 700°C, about 750°C, or about 800°C for about 6 hours, about 7 hours, about 8 hours, about 9 hours, or about 10 hours; optionally, the temperature of the sintering, and the time of the sintering, may be within any range of any of the above values.

In the third cladding step, by controlling the sintering temperature and time within the above ranges, the following can be effectively avoided: if the sintering temperature in the third cladding step is too low, it will result in a decrease in the degree of graphitization of the third cladding layer, which will affect its electrical conductivity, thereby affecting the specific capacity exertion of the positive electrode active material; if the sintering temperature is too high, it will result in an excessive degree of graphitization of the third cladding layer, which will affect the Li⁺ transmission, thereby affecting the specific capacity exertion and the like of the positive electrode active material; if the sintering time is too short, it will result in the cladding layer being too thin, affecting its electrical conductivity, thereby affecting the specific capacity exertion of the positive electrode active material; and if the sintering time is too long, it will result in the cladding layer being too thick, affecting the compaction density and the like of the positive electrode active material.

In the above first cladding step, second cladding step, and third cladding step, the drying may all be carried out at a drying temperature of 100°C to 200°C, optionally 110°C to 190°C, more optionally 120°C to 180°C, even more optionally 120°C to 170°C, and most optionally 120°C to 160°C., and the drying time may be from 3 hours to 9 hours, optionally 4 hours to 8 hours, more optionally 5 hours to 7 hours, and most optionally about 6 hours.

By the positive electrode active material prepared by the method for preparing the positive electrode active material described in the present application, the battery prepared therefrom has a reduced amount of leaching out of Mn and Mn-site doping elements after cycling, and the improved high-temperature storage performance, cycling performance, and rate performance . In addition, the raw materials are widely available, low cost and simple process, which is conducive to industrialization.

### Positive electrode plate

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 90 wt% to 99.5 wt%, based on the total weight of the positive electrode film layer.The positive electrode current collector has two surfaces opposite to each other in the direction of its own thickness, and the positive electrode film layer is provided on either or both of two opposite surfaces of the positive electrode current collector.

In some embodiments, the positive electrode active material is present in the positive electrode film layer in a content of 95 wt% to 99.5 wt%, based on the total weight of the positive electrode film layer.

The positive electrode film layer does not exclude other positive electrode active material than the positive electrode active material of the first aspect of the present application or the positive electrode active material prepared by the method of the second aspect of the present application. For example, the positive electrode film may also comprise at least one of a lithium transition metal oxide and a modified compound thereof. By way of example, the other positive electrode active material may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In some embodiments, optionally the positive electrode film layer may further comprise a positive conductive agent. In the present application, the type of the positive conductive agent is not particularly limited. As an example, the positive conductive agent comprises at least one of superconducting carbon, conductive graphite, acetylene black, carbon black, Ketjen black, carbon dots, carbon nanotubes, graphene, and carbon nanofibers.

In some embodiments, the positive electrode film layer may further optionally comprise a positive electrode binder. In the present application, the type of the positive electrode binder is not particularly limited. As an example, the positive electrode binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode current collector may be a metal foil or a composite current collector. As an example of a metal foil, an aluminum foil may be used. The composite current collector may comprise a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The positive electrode film layer is usually made by applying a positive electrode slurry to the positive electrode current collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in the secondary battery. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for the secondary battery may also be used. These negative electrode active materials can be used alone, or in combination of two or more materials.

In some embodiments, the negative electrode film layer may also optionally comprise a negative conductive agent. In the present application, the type of the negative conductive agent is not particularly limited and, as an example, the negative conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film layer may optionally also include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer cladding the surface of the negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution).

In some embodiments, an electrolytic solution is used as the electrolyte. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, examples of the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary battery using an electrolytic solution and some secondary battery using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

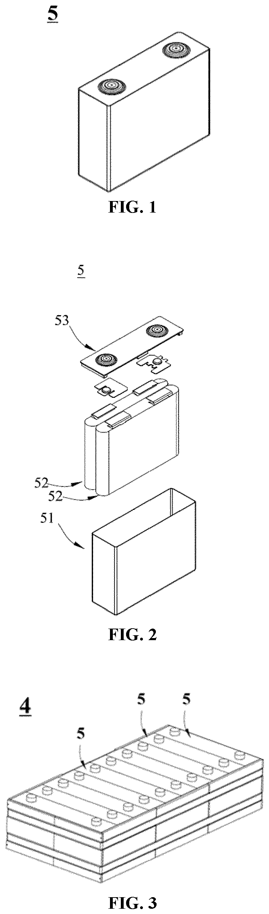

The present application does not have particular limitation to the shape of the secondary battery. The secondary battery may be cylindrical, square, or in other arbitrary shape. Fig. 1 shows a secondary battery 5 with a square structure as an example.

In some embodiments, as shown in Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or stacked to form an electrode assembly 52, which is encapsulated in the receiving cavity. An electrolytic solution is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and an electrolytic solution may be assembled to form a secondary battery. As an example, a positive electrode plate, a separator, and a negative electrode plate can be made into an electrode assembly by a winding process or a stacking process, and the electrode assembly can be placed in an outer package and is subjected to drying, after which an electrolytic solution is injected. After vacuum encapsulation, resting, chemical formation, and shaping process, a secondary battery can be obtained.

In some embodiments of the present application, the secondary battery according to the present application can be assembled into a battery module, and the number of secondary battery contained in the battery modules can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

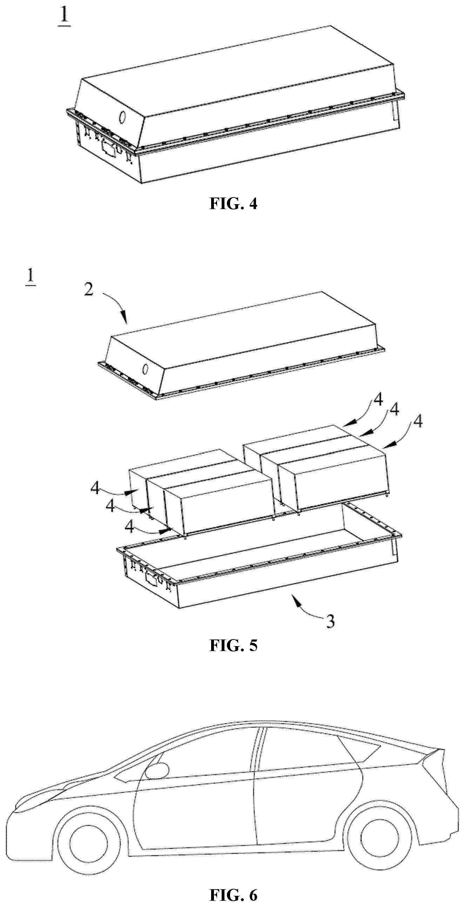

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### (1) Preparation of positive electrode active material

### S1: Preparation of doped manganese oxalate

1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

### S2: Preparation of core of doped lithium manganese phosphate

1 mol of the above particles of manganese oxalate, 0.497 mol of lithium carbonate, 0.001 mol of Mo(SO₄)₃, aqueous phosphoric acid solution containing 0.999 mol of phosphoric acid at a concentration of 85%, 0.001 mol of H₄SiO₄, and 0.0005 mol of NH₄HF₂ were added to 20 L of deionized water. The mixture was transferred to a sanding mill and well ground and stirred for 10 hours to obtain a slurry. The slurry was transferred to a spray drying equipment for spray drying granulation, with a drying temperature of250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001}, i.e. a core of doped lithium manganese phosphate.

### S3: Preparation of the first cladding layer suspension

Li₂FeP₂O₇ solution was prepared by dissolving 7.4 g of lithium carbonate, 11.6 g of ferrous carbonate, 23.0 g of ammonium dihydrogen phosphate, and 12.6 g of oxalic acid dihydrate in 500 mL of deionized water, controlling the pH to be 5, and then stirred and reacted for 2 hours at room temperature to obtain the solution, after which the solution was warmed up to 80°C and kept at this temperature for 4 hours to obtain the first cladding layer suspension.

### S4: Cladding of the first cladding layer

10 mol (about 1574 g) of the core material of doped lithium manganese phosphate obtained in step S2 is added to the first cladding layer suspension (with a material content of the first cladding of 15.7 g) obtained in step S3, and mixed with sufficient stirring for 6 hours, and after mixing well, transferred to an oven at 120°C for drying for 6 hours, and then sintered at 650°C for 6 hours to obtain the pyrophosphate-coated material.

### S5: Preparation of the second cladding layer suspension

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and then stirred and reacted for 6 hours to obtain a solution, and then the solution was warmed up to 120°C and kept at this temperature for 6 hours to obtain the second cladding layer suspension.

### S6: Cladding of the second cladding layer

The pyrophosphate-coated material obtained in Step S4 was added to the second cladding layer suspension (with a material content of the second cladding of 47.1 g) obtained in Step S5, and mixed with thorough stirring for 6 hours, and after the mixture was homogeneous, it was transferred to an oven at 120°C for drying for 6 hours, and then sintered at 700°C for 8 hours to obtain the two-layer coated material.

### S7: Preparation of the aqueous solution of the third cladding layer

37.3 g of sucrose was dissolved in 500 g of deionized water, then stirred and fully dissolved to obtain an aqueous solution of sucrose.

### S8: Cladding of the third cladding layer

The two-layer coated material obtained in Step S6 was added to the sucrose solution obtained in Step S7, stirred and mixed together for 6 hours, and after mixing uniformly, transferred to an oven at 150°C to dry for 6 hours, and then sintered at 700°C for 10 hours to obtain the three-layer coated material.

### (2) Preparation of positive electrode plate

The three-layer coated positive electrode active material, acetylene black as a conductive agent, polyvinylidene difluoride (PVDF) as a binder in a weight ratio of 97.0:1.2:1.8 were added to N-methylpyrrolidone (NMP), stirred and mixed homogeneously to obtain a positive electrode slurry. The positive electrode slurry was then uniformly applied to an aluminum foil at 0.280g/1540.25mm², and then dried, cold pressed, and slit to obtain a positive electrode plate.

### (3) Preparation of negative electrode plate

Artificial graphite as a negative active material, hard carbon, acetylene black as a conductive agent, styrene butadiene rubber (SBR) as a binder, sodium carboxymethyl cellulose (CMC) as a thickener in a weight ratio of 90:5:2:2: 1 were dissolved in a solvent deionized water, which was stirred and mixed well to prepare a negative electrode slurry. The negative electrode slurry was uniformly applied to a copper foil as a current collector at 117g/1540.25mm², and then dried, cold pressed, and slit to obtain a negative electrode plate.

### (4) Preparation of electrolytic solution

In an argon atmosphere glove box (H₂O<0.1ppm, O₂<0.1ppm), the organic solvent ethylene carbonate (EC)/ethyl methyl carbonate (EMC) was mixed homogeneously in accordance with the volume ratio of 3/7, and 12.5 wt% (based on the weight of the solvent of ethylene carbonate/ethyl methyl carbonate) of LiPF₆ was added to dissolve in the organic solvent mentioned above, and stirred homogeneously, to obtain the electrolytic solution.

### (5) Preparation of separator

A commercially available PP-PE copolymer microporous film with a thickness of 20 µm and an average pore size of 80 nm was used (from JOCO Electronic Technology Company, model 20).

### (6) Preparation of full battery

The resulting positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery.

### (7) Preparation of button battery

The three-layer coated positive electrode active material, polyvinylidene difluoride (PVDF), and acetylene black in a weight ratio of 90:5:5 were added to N-methylpyrrolidone (NMP) and stirred in a drying room to make a slurry. The above slurry was applied to an aluminum foil, dried and cold pressed to form a positive electrode plate. The cladding amount was 0.2g/cm² and the compaction density was 2.0g/cm³.

Lithium sheet was used as a negative electrode, a 1 mol/L solution of LiPF₆ in a mixture of ethylene carbonate (EC), diethyl carbonate (DEC) and dimethyl carbonate (DMC) at a volume ratio of 1:1:1 was used as an electrolytic solution, and they were assembled together with the above prepared positive electrode plate in a button battery box to form a button battery (hereinafter also referred to as "button").

### Example 2

Example 2 was the same as Example 1, with the exception that in steps S1 and S2, the amount of FeSO₄·H₂O was adjusted to 0.68 mol, the amount of Li₂CO₃ was adjusted to 0.4885 mol, Mo(SO₄)₃ was replaced with MgSO₄, H₄SiO₄ was replaced with HNO₃, and 0.02 mol of Ti(SO₄)₂ was added in the step S1 of preparation of doped manganese oxalate.

### Example 3

Example 3 was the same as Example 1, with the exception that in steps S1 and S2, the amount of Li₂CO₃ was adjusted to 0.496 mol, Mo(SO₄)₃ was replaced with W(SO₄)₃, and H₄SiO₄ was replaced with H₂SO₄.

### Example 4

Example 4 was the same as Example 1, with the exception that in steps S1 and S2, the amount of Li₂CO₃ was adjusted to 0.4985 mol, 0.001 mol of Mo(SO₄)₃ was replaced with 0.0005 mol of Al₂(SO₄)₃, and NH₄HF₂ was replaced with NH₄HCl₂.

### Example 5

Example 5 was the same as Example 1, with the exception that in steps S 1 and S2, the amount of FeSO₄·H₂O was adjusted to 0.69 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ was added in the step S1 of preparation of doped manganese oxalate.

### Example 6

Example 6 was the same as Example 1, with the exception that in steps S 1 and S2, the amount of FeSO₄·H₂O was adjusted to 0.68 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ and 0.01 mol of MgSO₄ were added in the step S1 of preparation of doped manganese oxalate.

### Example 7

Example 7 was the same as Example 6, with the exception that in steps S1 and S2, MgSO₄ was replaced with CoSO₄.

### Example 8

Example 8 was the same as Example 6, with the exception that in steps S1 and S2, MgSO₄ was replaced with NiSO₄.

### Example 9

Example 9 was the same as Example 1, with the exception that in steps S1 and S2, the amount of FeSO₄·H₂O was adjusted to 0.698 mol, the amount of Li₂CO₃ was adjusted to 0.4955 mol, and 0.001 mol of Mo(SO₄)₃ was replaced with 0.0005 mol of Nb₂(SO₄)₅, H₄SiO₄ was replaced with H₂SO₄, NH₄HF₂ was replaced with NH₄HCl₂, and 0.002 mol of Ti(SO₄)₂ was added in the step S1 of preparation of doped manganese oxalate.

### Example 10

Example 10 was the same as Example 1, with the exception that in steps S1 and S2, the amount of FeSO₄·H₂O was adjusted to 0.68 mol, the amount of Li₂CO₃ was adjusted to 0.4975 mol, 0.001 mol of Mo(SO₄)₃ was replaced with 0.0005 mol of Nb₂(SO₄)₅, NH₄HF₂ was replaced with NH₄HBr₂, and 0.01 mol of VCl₂ and 0.01 mol of MgSO₄ were added in the step S1 of preparation of doped manganese oxalate.

### Example 11

Example 11 was the same as Example 1, with the exception that in steps S1 and S2, the amount of FeSO₄·H₂O was adjusted to 0.69 mol, the amount of Li₂CO₃ was adjusted to 0.499 mol, Mo(SO₄)₃ was replaced with MgSO₄, NH₄HF₂ was replaced with NH₄HBr₂, and 0.01 mol of VCl₂ was added in the step S1 of preparation of doped manganese oxalate.

### Example 12

Example 12 was the same as Example 1, with the exception that in steps S1 and S2, the amount of MnSO₄·H₂O was adjusted to 1.36 mol, the amount of FeSO₄·H₂O was adjusted to 0.6 mol, the amount of Li₂CO₃ was adjusted to 0.4985 mol, Mo(SO₄)₃ was replaced with MgSO₄, H₄SiO₄ was replaced with HNO₃, and 0.04 mol of VCl₂ was added in the step S1 of preparation of doped manganese oxalate.

### Example 13

Example 13 was the same as Example 12, with the exception that in steps S1 and S2, the amount of MnSO₄·H₂O was adjusted to 1.16 mol, and the amount of FeSO₄·H₂O was adjusted to 0.8 mol.

### Example 14

Example 14 was the same as Example 12, with the exception that in steps S1 and S2, the amount of MnSO₄·H₂O was adjusted to 1.3 mol, and the amount of VCl₂ was adjusted to 0.1 mol.

### Example 15

Example 15 was the same as Example 1, with the exception that in steps S1 and S2, the amount of MnSO₄·H₂O was adjusted to 1.2 mol, the amount of Li₂CO₃ was adjusted to 0.494 mol, 0.001 mol of Mo(SO₄)₃ was replaced with 0.005 mol of MgSO₄, H₄SiO₄ was replaced with H₂SO₄, and 0.1 mol of VCl₂ was added in the step S1 of preparation of doped manganese oxalate.

### Example 16

Example 16 was the same as Example 1, with the exception that in steps S1 and S2, the amount of MnSO₄·H₂O was adjusted to 1.2 mol, the amount of Li₂CO₃ was adjusted to 0.467 mol, and 0.001 mol of Mo(SO₄)₃ was replaced with 0.005 mol of MgSO₄, 0.001 mol of H₄SiO₄ was replaced with 0.005 mol of H₂SO₄, 1.175 mol of phosphoric acid with a concentration of 85% was replaced with 1.171 mol of phosphoric acid with a concentration of 85%, and 0.1 mol of VCl₂ was added in the step S1 of preparation of doped manganese oxalate.

### Example 17

Example 17 was the same as Example 1, with the exception that in steps S1 and S2, the amount of MnSO₄·H₂O was adjusted to 1.2 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ was added in the step S1 of preparation of doped manganese oxalate.

### Example 18

Example 18 was the same as Example 1, with the exception that in steps S1 and S2, the amount of FeSO₄·H₂O was adjusted to 0.5 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ and 0.1 mol of CoSO₄ were added in the step S1 of preparation of doped manganese oxalate.

### Example 19

Example 19 was the same as Example 18, with the exception that in steps S1 and S2, the amount of FeSO₄·H₂O was adjusted to 0.4 mol, and the amount of CoSO₄ was adjusted to 0.2 mol.

### Example 20

Example 20 was the same as Example 18, with the exception that in steps S1 and S2, the amount of MnSO₄·H₂O was adjusted to 1.5 mol, the amount of FeSO₄·H₂O was adjusted to 0.1 mol, and the amount of CoSO₄ was adjusted to 0.3 mol.

### Example 21

Example 21 was the same as Example 18, with the exception that in steps S1 and S2, 0.1 mol of CoSO₄ was replaced with 0.1 mol of NiSO₄.

### Example 22

Example 22 was the same as Example 18, with the exception that in steps S1 and S2, the amount of MnSO₄·H₂O was adjusted to 1.5 mol, the amount of FeSO₄·H₂O was adjusted to 0.2 mol, and 0.1 mol of CoSO₄ was replaced with 0.2 mol of NiSO₄.

### Example 23

Example 23 was the same as Example 18, with the exception that in steps S1 and S2, the amount of MnSO₄·H₂O was adjusted to 1.4 mol, the amount of FeSO₄·H₂O was adjusted to 0.3 mol, and the amount of CoSO₄ was adjusted to 0.2 mol.

### Example 24

Example 24 was the same as Example 18, with the exception that in steps S1 and S2, the amount of MnSO₄·H₂O was adjusted to 1.2 mol, the amount of FeSO₄·H₂O was adjusted to 0.5 mol, and the amount of CoSO₄ was adjusted to 0.2 mol.

### Example 25

Example 25 was the same as Example 18, with the exception that in steps S1 and S2, the amount of MnSO₄·H₂O was adjusted to 1.0 mol, the amount of FeSO₄·H₂O was adjusted to 0.7 mol, and the amount of CoSO₄ was adjusted to 0.2 mol.

### Example 26

Example 26 was the same as Example 1, with the exception that in steps S1 and S2, the amount of MnSO₄·H₂O was adjusted to 1.4 mol, the amount of FeSO₄·H₂O was adjusted to 0.3 mol, the amount of Li₂CO₃ was adjusted to 0.4825 mol, 0.001 mol of Mo(SO₄)₃ was replaced with 0.005 mol of MgSO₄, the amount of H₄SiO₄ was adjusted to 0.1 mol, the amount of phosphoric acid was adjusted to 0.9 mol, the amount of NH₄HF₂ was adjusted to 0.04 mol, and 0.1 mol of VCl₂ and 0.2 mol of CoSO₄ were added in the step S1 of preparation of doped manganese oxalate.

### Example 27

Example 27 was the same as Example 1, with the exception that in steps S1 and S2, the amount of MnSO₄·H₂O was adjusted to 1.4 mol, the amount of FeSO₄·H₂O was adjusted to 0.3 mol, the amount of Li₂CO₃ was adjusted to 0.485 mol, and 0.001 mol of Mo(SO₄)₃ was replaced with 0.005 mol of MgSO₄, the amount of H₄SiO₄ was adjusted to 0.08 mol, the amount of phosphoric acid was adjusted to 0.92 mol, the amount of NH₄HF₂ was adjusted to 0.05 mol, and 0.1 mol of VCl₂ and 0.2 mol of CoSO₄ were added in the step S1 of preparation of doped manganese oxalate.

### Examples 28-44

Examples 28-44 were the same as Example 1, with the exception that in steps from S3 to S6, the cladding was performed with different first cladding layer materials or second cladding layer materials. Reference was made to Tables 1 and 2 for the methods for preparing each of the cladding layer materials.

### Examples 45-59

Examples 45-59 were the same as Example 1, with the exception that in steps S4, S6 and S8, the amount of various raw materials of each cladding layer was adjusted according to the cladding amount shown in Table 8.

### Example 60

Example 60 was the same as Example 1, with the exception that in step S4, the sintering temperature of powder sintering step was adjusted to 550 °C and the sintering time was adjusted to 1 hour to control the crystallinity of Li₂FeP₂O₇ to 30%, and in the step S5, the cladding sintering temperature was adjusted to 650 °C and the sintering time was adjusted to 2 hours to control the crystallinity of LiFePO₄ to 30%.

### Example 61

Example 61 was the same as Example 1, with the exception that in step S4, the sintering temperature of powder sintering step was adjusted to 550 °C and the sintering time was adjusted to 2 hours to control the crystallinity of Li₂FeP₂O₇ to 50%, and in the step S5, the cladding sintering temperature was adjusted to 650 °C and the sintering time was adjusted to 3 hours to control the crystallinity of LiFePO₄ to 50%.

### Example 62

Example 62 was the same as Example 1, with the exception that in step S4, the sintering temperature of powder sintering step was adjusted to 600 °C and the sintering time was adjusted to 3 hours to control the crystallinity of Li₂FeP₂O₇ to 70%, and in the step S5, the cladding sintering temperature was adjusted to 650 °C and the sintering time was adjusted to 4 hours to control the crystallinity of LiFePO₄ to 70%.

### Comparative Example 1

Comparative Example 1 was the same as Example 1, with the exception that the step of preparation of positive electrode active material was changed.

Preparation of manganese oxalate: 1 mol of MnSO₄·H₂O was added to a reaction kettle and 10 L of deionized water and 1 mol of oxalic acid dihydrate (as oxalic acid) were added. The reaction kettle was heated to 80°C and stirred at 600 rpm for 6 h. The reaction ended (no bubbles were generated) to obtain a suspension of manganese oxalate. Then the suspension was filtered and the resulting filter cake was dried at 120°C, after which it was ground to obtain particles of manganese oxalate with a median particle size Dv₅₀ of 50-200 nm.

Preparation of positive electrode active material: 1 mol of the above particles of manganese oxalate, 0.5 mol of lithium carbonate, aqueous phosphoric acid solution containing 1 mol of 85% phosphoric acid, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain LiMnPO₄ coated with carbon.

### Comparative Example 2

Comparative Example 2 was the same as Comparative Example 1, with the exception that 1 mol of MnSO₄·H₂O was replaced with 0.85 mol of MnSO₄·H₂O and 0.15 mol of FeSO₄·H₂O, and MnSO₄·H₂O and FeSO₄·H₂O were mixed thoroughly in a mixer for 6 hours and then transferred to a reaction kettle.

### Comparative Example 3

Comparative Example 3 was the same as Example 1, with the exception that the step of preparation of positive electrode active material was changed.

Preparation of manganese oxalate: 1.9 mol of MnSO₄·H₂O and 0.1 mol of ZnSO₄ were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.495 mol of lithium carbonate, 0.005 mol of MgSO₄, aqueous phosphoric acid solution containing 1 mol of 85% phosphoric acid, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.990}Mg_{0.005}Mn_{0.95}Zn_{0.05}PO₄ coated with carbon.

### Comparative Example 4

Comparative Example 4 was the same as Example 1, with the exception that the step of preparation of positive electrode active material was changed.

Preparation of doped manganese oxalate: 1.2 mol of MnSO₄·H₂O and 0.8 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.45 mol of lithium carbonate, 0.005 mol of Nb₂(SO₄)₅, aqueous phosphoric acid solution containing 1 mol of 85% phosphoric acid, 0.025 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.90}Nb_{0.01}Mn_{0.6}Fe_{0.4}PO_{3.95}F_{0.05} coated with carbon.

### Comparative Example 5

Comparative Example 5 was the same as Example 1, with the exception that the step of preparation of positive electrode active material was changed.

Preparation of doped manganese oxalate: 1.4 mol of MnSO₄·H₂O and 0.6 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.38 mol of lithium carbonate, 0.12 mol of MgSO₄, aqueous phosphoric acid solution containing 0.999 mol of 85% phosphoric acid, 0.001 mol of H₄SiO₄, 0.0005 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.76}Mg_{0.12}Mn_{0.7}Fe_{0.3}P_{0.999}Si_{0.001}O_{3.999}F_{0.001} coated with carbon.

### Comparative Example 6

Comparative Example 6 was the same as Example 1, with the exception that the step of preparation of positive electrode active material was changed.

Preparation of manganese oxalate: 0.8 mol of MnSO₄·H₂O and 1.2 mol of ZnSO₄ were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.499 mol of lithium carbonate, 0.001 mol of MgSO₄, aqueous phosphoric acid solution containing 0.999 mol of 85% phosphoric acid, 0.001 mol of H₄SiO₄, 0.0005mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.998}Mg_{0.001}Mn_{0.4}Zn_{0.6}P_{0.999}Si_{0.001}O_{3.999}F_{0.001} coated with carbon.

### Comparative Example 7

Comparative Example 7 was the same as Example 1, with the exception that the step of preparation of positive electrode active material was changed.

Preparation of doped manganese oxalate: 1.4 mol of MnSO₄·H₂O and 0.6 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.534 mol of lithium carbonate, 0.001 mol of MgSO₄, aqueous phosphoric acid solution containing 0.88 mol of 85% phosphoric acid, 0.12 mol of H₄SiO₄, 0.025mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{1.068}Mg_{0.001}Mn_{0.7}Fe_{0.3}P_{0.88}Si_{0.12}O_{3.95}F_{0.05} coated with carbon.

### Comparative Example 8

Comparative Example 8 was the same as Example 1, with the exception that the step of preparation of positive electrode active material was changed.

Preparation of doped manganese oxalate: 1.2 mol of MnSO₄·H₂O and 0.8 mol of FeSO₄·H₂O were mixed thoroughly in a mixer for 6 hours. The mixture was transferred to a reaction kettle, and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered, and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.474 mol of lithium carbonate, 0.001 mol of MgSO₄, aqueous phosphoric acid solution containing 0.93 mol of 85% phosphoric acid, 0.07mol of H₄SiO₄, 0.06 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.948}Mg_{0.001}Mn_{0.6}Fe_{0.4}P_{0.93}Si_{0.07}O_{3.88}F_{0.12} coated with carbon.

### Comparative Example 9

Comparative Example 9 was the same as Example 1, with the exception that the step of preparation of positive electrode active material was changed.

Preparation of doped manganese oxalate: 1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.497 mol of lithium carbonate, 0.001 mol of Mo(SO₄)₃, aqueous phosphoric acid solution containing 0.999 mol of 85% phosphoric acid, 0.001 mol of H₄SiO₄, 0.0005 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001} coated with carbon.

### Comparative Example 10

Comparative Example 10 was the same as Example 1, with the exception that the step S4 was changed and steps S5 and S6 were not performed.

### S4: Cladding of the first cladding layer

10 mol (about 1574 g) of the core material of doped lithium manganese phosphate obtained in step S2 is added to the first cladding layer suspension (with a material content of the first cladding of 62.8 g) obtained in step S3, and mixed with sufficient stirring for 6 hours, and after mixing well, transferred to an oven at 120°C for drying for 6 hours, and then sintered at 500°C for 4 hours to control the crystallinity of Li₂FeP₂O₇ to 5%, to obtain the amorphous Li₂FeP₂O₇-coated material.

### Comparative Example 11

Comparative Example 11 was the same as Example 1, with the exception that the step S6 was changed and steps S3 and S4 were not performed.

### S6: Cladding of the second cladding layer

10 mol (about 1574 g) of the core material of doped lithium manganese phosphate obtained in step S2 was added to the second cladding layer suspension (with a material content of the second cladding of 62.8 g) obtained in Step S5, and mixed with thorough stirring for 6 hours, and after the mixture was homogeneous, it was transferred to an oven at 120°C for drying for 6 hours, and then sintered at 600°C for 4 hours to control the crystallinity of LiFePO₄ to 8%, to obtain the amorphous LiFePO₄-coated material.

### Comparative Example 12

Comparative Example 12 was the same as Example 1, with the exception that the steps S4 and S6 were changed.

### S4: Cladding of the first cladding layer

10 mol (about 1574 g) of the core material of doped lithium manganese phosphate obtained in step S2 is added to the first cladding layer suspension (with a material content of the first cladding of 15.7 g) obtained in step S3, and mixed with sufficient stirring for 6 hours, and after mixing well, transferred to an oven at 120°C for drying for 6 hours, and then sintered at 500°C for 4 hours to control the crystallinity of Li₂FeP₂O₇ to 5%, to obtain the amorphous Li₂FeP₂O₇-coated material.

### S6: Cladding of the second cladding layer

The amorphous Li₂FeP₂O₇-coated material obtained in Step S4 was added to the second cladding layer suspension (with a material content of the second cladding of 47.1 g) obtained in Step S5, and mixed with thorough stirring for 6 hours, and after the mixture was homogeneous, it was transferred to an oven at 120°C for drying for 6 hours, and then sintered at 600°C for 4 hours to control the crystallinity of LiFePO₄ to 8%, to obtain the amorphous Li₂FeP₂O₇ and amorphous LiFePO₄-coated material.

### Performance test section

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

With the preparation method of a button battery in the above Example, the positive electrode active material samples each were prepared into a button battery. The button battery was charged at a small rate of 0.05C until the current decreased to 0.01C. Then the positive electrode plate was taken out of the button battery and soaked in DMC for 8 hours. After drying and scraping the powder off, the particles with a particle size less than 500 nm were screened out. A sample was taken and its volume of lattice cell v1 was calculated in the same way as the fresh sample was tested above. (v0-v1)/v0 × 100% representing the lattice change rate of before and after complete de-intercalation and intercalation of lithium was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for compaction density

5g of the positive electrode active material powders as prepared above were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 4. Measurement method for surface oxygen valence

5g of the positive electrode active material samples each were taken and prepared into a button battery according to the preparation method of a button battery described in the above Example. The button battery was charged at a low rate of 0.05C until the current decreased to 0.01C. Then the positive electrode plate was taken out of the button battery and soaked in DMC for 8 hours. After drying and scraping the powder off, the particles with a particle size less than 500 nm were screened out. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 5. Measurement method for leaching out of Mn (and Fe doped at Mn site) after cycling

At 45 °C, a full battery prepared according to each of the above examples and comparative examples with capacity reduced to 80% was discharged to 2.0 V of cutoff voltage at a rate of 0.1 C. Then the battery was disassembled, and the negative electrode plate was taken out. 30 discs of unit areas (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 6. Measurement method for initial specific capacity of a button battery

A button battery prepared according to each of the above examples and comparative examples was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was the initial specific capacity, denoted as D0.

### 7. Measurement method for 3C charging constant current ratio

Under a constant temperature environment of 25°C, a fresh full battery prepared according to each of the above examples and comparative examples was rested for 5 minutes and discharged at a rate of 1/3C to 2.5V, and was rested for 5 minutes and charged at 1/3C to 4.3V, and then charged at a constant voltage at 4.3V until the current was less than or equal to 0.05 mA. The full battery was rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was C1/C0 × 100%.

The higher the 3C charging constant current ratio, the better the rate performance of the secondary battery.

### 8. Test of gas expansion of full battery stored at 60°Cfor 30 days

A full battery prepared according to each of the above examples and comparative examples with 100% state of charge (SOC) was stored at 60°C. Before, during and after the storage, the open circuit voltage (OCV) and AC internal impedance (IMP) of the battery were tested to monitor SOC and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity Fi of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ × g × V, the volume of battery was calculated: V=( F₁-F₂)/(ρ×g).

From the OCV and IMP test results, it can be seen that the battery of all examples maintains a SOC of 99% or higher throughout the testing process until the end of storage.

After 30 days of storage, the volume of battery was measured, and the percentage increase in battery volume after storage compared to the previous battery volume was calculated.

### 9. Test of cycling performance at 45 °C of full battery

Under a constant temperature environment of 45°C, a full battery was charged at 1C to 4.3V, and then charged at a constant voltage at 4.3V until the current was less than or equal to 0.05 mA. The full battery was rested for 5 minutes, then discharged at 1C to 2.5V. The discharging capacity at this moment was reported as E0. The above charging-discharging cycle was repeated until the discharging capacity was reduced to 80% of E0. The number of cycles the battery had undergone at this moment was reported.

### 10. Test for interplanar spacing and angle

1g of each positive electrode active material powder made above was added into a 50mL test tube, and injected 10mL of alcohol with a mass fraction of 75% into the test tube, stirred and dispersed for 30 minutes, and then a clean disposable plastic pipette was used to take an appropriate amount of the above solution and it was added dropwise on a 300-mesh copper mesh, at this time, some of the powder was left on the mesh, and then the mesh was transferred to a TEM (Talos F200s G2) sample chamber with the sample for testing, and the original pictures of TEM test was obtained.

The original images from the above TEM test were opened in DigitalMicrograph software and Fourier transformed (automatically done by the software after clicking on the operation) to obtain the diffraction pattern, and the distance from the diffracted spot to the center of the diffraction pattern was measured to obtain the interplanar spacing, and the angle was calculated according to the Bragg equation.

By comparing the obtained interplanar spacing and the corresponding angle with their standard values, the different substances in the cladding layer can be recognized.

### 11. Measurement for the thickness of cladding layer

The thickness of the cladding layer was tested via FIB by cutting a thin slice with a thickness of about 100 nm from the center of a single particle of the positive electrode active material produced as described above, and then conducting TEM test on the thin slice to obtain the original picture of the TEM test.

The original pictures from the above TEM test were opened in DigitalMicrograph software, and the interplanar spacing and angle information were used to recognize the cladding layer and measure the thickness of the cladding layer.

### The thickness was measured at three locations for the selected particles and averaged.

12. Determination of the molar ratio of SP2 and SP3 morphologys in the carbon of the third cladding layer

This test was performed by Raman spectroscopy. The molar ratio of the two morphologys was confirmed by splitting the peaks of the energy spectrum of the Raman test to obtain I_{d}/I_{g}, with I_{d} being the peak intensity of the SP3 carbon and Ig being the peak intensity of the SP2 carbon.

### 13. Determination of the chemical formula of the inner core and the composition of different cladding layers

The internal microstructure and surface structure of the positive electrode active material were characterized with high spatial resolution by the spherical Aberration Corrected Scanning Transmission Electron Microscope (ACSTEM) in combination with the three-dimensional reconstruction technology, so that the chemical formula of the core and compositions of the cladding layers of the positive electrode active material were obtained.

**Table 1**

| Material for the first cladding layer | Preparation of the first cladding layer suspension |
|---|---|
| Crystalline Al₄(P₂O₇)₃ | Dissolving 53.3 g aluminium chloride, 34.5 g ammonium dihydrogen phosphate and 18.9 g oxalic acid dehydrate in 500 ml of deionized water with a controlled pH of 4, and then stirring and fully reacting for 2 hours to obtain a solution, after which the solution was warmed to 80°C and maintained at this temperature for 4 hours to obtain a suspension |
| Crystalline Li₂NiP₂O₇ | Dissolving 7.4g lithium carbonate, 11.9g nickel carbonate, 23.0g ammonium dihydrogen phosphate and 12.6g oxalic acid dihydrate in 500 ml of deionized water with a controlled pH of 5, and then stirring and fully reacting for 2 hours to obtain a solution, after which the solution was warmed to 80°C and maintained at this temperature for 4 hours to obtain a suspension |
| Crystalline Li₂MgP₂O₇ | Dissolving 7.4g lithium carbonate, 8.4g magnesium carbonate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline Li₂CoP₂O₇ | Dissolving 7.4g lithium carbonate, 15.5g cobalt sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline Li₂CuP₂O₇ | Dissolving 7.4g lithium carbonate, 16.0g copper sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline Li₂ZnP₂O₇ | Dissolving 7.4g lithium carbonate, 12.5g zinc carbonate,23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline TiP₂O₇ | Dissolving 24.0g titanium sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline Ag₄P₂O₇ | Dissolving 67.9g silver Nitrate, 23.0g ammonium dihydrogen phosphate and 25.2goxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Crystalline ZrP₂O₇ | Dissolving 56.6g zirconium sulfate, 23.0g ammonium dihydrogen phosphate and 25.2g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |

**Table 2**

| Material for the second cladding layer | Preparation of the second cladding layer suspension |
|---|---|
| Crystalline LiCoPO₄ | Dissolving 3.7g lithium carbonate, 15.5g cobalt sulfate, 11.5g ammonium dihydrogen phosphate and 12.6g oxalic acid dihydrate in 1500 mL of deionized water, and then stirring and fully reacting for 6 hours to obtain a solution, after which the solution was warmed to 120°C and maintained at this temperature for 6 hours to obtain a suspension |
| Crystalline LiNiPO₄ | Dissolving 3.7g lithium carbonate, 11.9g nickel carbonate, 11.5g ammonium dihydrogen phosphate and 12.6g oxalic acid dehydrate in 1500 mL of deionized water, and then stirring and fully reacting for 6 hours to obtain a solution, after which the solution was warmed to 120°C and maintained at this temperature for 6 hours to obtain a suspension |
| Crystalline Cu₃(PO₄)₂ | Dissolving 48.0g copper sulfate, 23.0g ammonium dihydrogen phosphate, 37.8g oxalic acid dihydrate in 1500mL of deionized water, and then stirring and fully reacting for 6 hours to obtain a solution, after which the solution was heated to 120°C and maintained at this temperature for 6 hours to obtain a suspension |
| Crystalline Zn₃(PO₄)₂ | Dissolving 37.6g zinc carbonate, 23.0g ammonium dihydrogen phosphate and 37.8g oxalic acid dihydrate in 1500mL of deionized water, and then stirring and fully reacting for 6 hours to obtain a solution, after which the solution was heated to 120°C and maintained at this temperature for 6 hours to obtain a suspension |
| Crystalline Ti₃(PO₄)₄ | Dissolving 72.0g titanium sulfate, 46.0g ammonium dihydrogen phosphate and 75.6g oxalic acid dihydrate in 1500mL of deionized water, and then stirring and fully reacting for 6 hours to obtain a solution, after which the solution was heated to 120°C and maintained at this temperature for 6 hours to obtain a suspension |
| Crystalline Ag₃PO₄ | Dissolving 50.9g silver nitrate, 11.5g ammonium dihydrogen phosphate and 18.9g oxalic acid dihydrate in 1500mL of deionized water, and then stirring and fully reacting for 6 hours to obtain a solution, after which the solution was heated to 120°C and maintained at this temperature for 6 hours to obtain a suspension |
| Crystalline Zr₃(PO₄)₄ | Dissolving 85.0g zirconium sulfate,46.0g ammonium dihydrogen phosphate and 37.8g oxalic acid dihydrate in 1500mL of deionized water, and then stirring and fully reacting for 6 hours to obtain a solution, after which the solution was heated to 120°C and maintained at this temperature for 6 hours to obtain a suspension |
| Crystalline AlPO₄ | Dissolving 13.3g aluminum chloride, 11.5g ammonium dihydrogen phosphate and 18.9g oxalic acid dihydrate in 1500mL of deionized water, and then stirring and fully reacting for 6 hours to obtain a solution, after which the solution was heated to 120°C and maintained at this temperature for 6 hours to obtain a suspension |

Table 3 shows the composition of the positive electrode active material in Comparative Examples 1-12.

Table 4 shows performance data of the positive electrode active material, the positive electrode plate, the button battery or full battery in Comparative Examples 1-12 measured in accordance with the above performance test methods.

Table 5 shows the composition of the positive electrode active material in Examples 1-44.

Table 6 shows performance data of the positive electrode active material, the positive electrode plate, the button battery or full battery in Examples 1-44 measured in accordance with the above performance test methods.

**Table 3**

| No. | Core | First cladding laver | Second cladding laver | Third cladding laver |
|---|---|---|---|---|
| Comparative Example 1 | LiMnPO₄ | - | - | 1% carbon |
| Comparative Example 2 | LiMn_{0.85}Fe_{0.15}PO₄ | - | - | 1% carbon |
| Comparative Example 3 | Li_{0.990}Mg_{0.005}Mn_{0.95}Zn_{0.05}PO₄ | - | - | 1% carbon |
| Comparative Example 4 | Li_{0.90}Nb_{0.01}Mn_{0.6}Fe_{0.4}PO_{3.95}F_{0.05} | - | - | 1% carbon |
| Comparative Example 5 | Li_{0.76}Mg_{0.12}Mn_{0.7}Fe_{0.3}P_{0.999}Si_{0.001}O_{3.999}F_{0.001} | - | - | 1% carbon |
| Comparative Example 6 | Li_{0.998}Mg_{0.001}Mn_{0.4}Zn_{0.6}P_{0.999}Si_{0.001}O_{3.999}F_{0.001} | - | - | 1% carbon |
| Comparative Example 7 | Li_{1.068}Mg_{0.001}Mn_{0.7}Fe_{0.3}P_{0.88}Si_{0.12}O_{3.95}F_{0.05} | - | - | 1% carbon |
| Comparative Example 8 | Li_{0.948}Mg_{0.001}Mn_{0.6}Fe_{0.4}P_{0.93}Si_{0.07}O_{3.88}F_{0.12} | - | - | 1% carbon |
| Comparative Example 9 | Li_{0.994}Mo_{0.001}Mn_{0.65}Fe_{0.35}P_{0.999}Si_{0.001}O_{3.999}F_{0.001} | - | - | 1% carbon |
| Comparative Example 10 | Li_{0.994}Mo_{0.001}Mn_{0.65}Fe_{0.35}P_{0.999}Si_{0.001}O_{3.999}F_{0.001} | 4% amorphous Li₂FeP₂O₇ | - | 1% carbon |
| Comparative Example 11 | Li_{0.994}Mo_{0.001}Mn_{0.65}Fe_{0.35}P_{0.999}Si_{0.001}O_{3.999}F_{0.001} | - | 4% amorphous LiFePO₄ | 1% carbon |
| Comparative Example 12 | Li_{0.994}Mo_{0.001}Mn_{0.65}Fe_{0.35}P_{0.999}Si_{0.001}O_{3.999}F_{0.001} | 1% amorphous Li₂FeP₂O₇ | 3% amorphous LiFePO₄ | 1% carbon |

**Table 4**

| No. | Lattice chang e rate | Li/Mn anti-site defect concentratio n (%) | Surface oxygen valence | (%) Compaction density (g/cm³) | Leaching out of Mn and Fe after cycling (ppm) | Capacity of button battery at 0.1C (mAh/g) | 3C charging constant current ratio (%) | Number of cycles at capacity retention of 80% @45°C | Expansion rate of battery stored at 60°C for 30 days (%) |
|---|---|---|---|---|---|---|---|---|---|
| Comparativ e Example 1 | 11.4 | 5.2 | -1.55 | 1.7 | 2060 | 125.6 | 50.1 | 121 | 48.6 |
| Comparativ e Example 2 | 10.6 | 4.3 | -1.51 | 1.87 | 1510 | 126.4 | 50.4 | 129 | 37.3 |
| Comparativ e Example 3 | 10.8 | 3.6 | -1.64 | 1.88 | 1028 | 134.7 | 51.7 | 134 | 31.9 |
| Comparativ e Example 4 | 9.7 | 2.4 | -1.71 | 1.93 | 980 | 141.3 | 62.3 | 148 | 30.8 |
| Comparative Example 5 | 5.6 | 1.8 | -1.81 | 1.98 | 873 | 110.8 | 50.2 | 387 | 21.4 |
| Comparativ e Example 6 | 3.7 | 1.5 | -1.8 | 2.01 | 574 | 74.3 | 65.8 | 469 | 15.8 |
| Comparativ e Example 7 | 7.8 | 1.5 | -1.75 | 2.05 | 447 | 139.4 | 64.3 | 396 | 18.3 |
| Comparativ e Example 8 | 8.4 | 1.4 | -1.79 | 2.16 | 263 | 141.7 | 63.9 | 407 | 22.7 |
| Comparativ e Example 9 | 6.3 | 1.2 | -1.82 | 2.21 | 192 | 156 | 64.2 | 552 | 8.4 |
| Comparativ e Example 10 | 6.3 | 1.1 | -1.90 | 2.22 | 156 | 156.2 | 63.7 | 802 | 6.7 |
| Comparativ e Example 11 | 6.2 | 1.1 | -1.91 | 2.21 | 164 | 156.1 | 62.5 | 860 | 6.4 |
| Comparativ e Example 12 | 6.2 | 1.1 | -1.90 | 2.2 | 143 | 156.2 | 67.1 | 1013 | 4.2 |

**Table 5**

| No. | Core | First cladding layer | Second cladding laver | Third cladding laver |
|---|---|---|---|---|
| Example 1 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO₄ | 1% carbon |
| Example 2 | Li_{0.977}Mg_{0.001}Mn_{0.65}Fe_{0.34}Ti_{0.01}P_{0.999}N_{0.001}O_{3.999}F_{0.001} | 1% Li₂FeP₂O₇ | 3% LiFePO₄ | 1% carbon |
| Example 3 | Li_{0.992}W_{0.001}Mn_{0.65}Fe_{0.35}P_{0.999}S_{0.001}O_{3.999}F_{0.001} | 1% Li₂FeP₂O₇ | 3% LiFePO₄ | 1% carbon |
| Example 4 | Li_{0.997}Al_{0.001}Mn_{0.65}Fe_{0.35}P_{0.999}Si_{0.001}O_{3.999}O_{0.001} | 1% Li₂FeP₂O₇ | 3% LiFePO₄ | 1% carbon |
| Example 5 | Li_{0.993}Nb_{0.001}Mn_{0.65}Fe_{0.345}V_{0.005}P_{0.999}S_{0.001}O_{3.999}F_{0.001} | 1% Li₂FeP₂O₇ | 3% LiFePO₄ | 1% carbon |
| Example 6 | Li_{0.993}Nb_{0.001}Mn_{0.65}Fe_{0.34}V_{0.005}Mg_{0.005}P_{0.999}S_{0.001}O_{3.999}F_{0.001} | 1% Li₂FeP₂O₇ | 3% LiFePO₄ | 1% carbon |
| Example 7 | Li_{0.993}Nb_{0.001}Mn_{0.65}Fe_{0.34}V_{0.005}Co_{0.005}P_{0.999}S_{0.001}O_{3.999}F_{0.001} | 1% Li₂FeP₂O₇ | 3% LiFePO₄ | 1% carbon |
| Example 8 | Li_{0.993}Nb_{0.001}Mn_{0.65}Fe_{0.34}V_{0.005}Ni_{0.005}P_{0.999}S_{0.001}O_{3.999}F_{0.001} | 1% Li₂FeP₂O₇ | 3% LiFePO₄ | 1% carbon |
| Example 9 | Li_{0.991}Nb_{0.001}Mn_{0.65}Fe_{0.349}Ti_{0.001}P_{0.999}S_{0.001}O_{3.999}Cl_{0.001} | 1% Li₂FeP₂O₇ | 3% LiFePO₄ | 1% carbon |
| Example 10 | Li_{0.995}Nb_{0.001}Mn_{0.65}Fe_{0.34}V_{0.005}Mg_{0.005}P_{0.999}Si_{0.001}O_{3.999}Br_{0. 001} | 1% Li₂FeP₂O₇ | 3% LiFePO₄ | 1% carbon |
| Example 11 | Li_{0.998}Mg_{0.001}Mn_{0.65}Fe_{0.345}V_{0.005}P_{0.999}Si_{0.001}O_{3.999}Br_{0.001} | 1% Li₂FeP₂O₇ | 3% LiFePO₄ | 1% carbon |
| Example 12 | Li_{0.997}Mg_{0.001}Mn_{0.68}Fe_{0.3}V_{0.02}P_{0.999}N_{0.001}O_{3.999}F_{0.001} | 1% Li₂FeP₂O₇ | 3% LiFePO₄ | 1% carbon |
| Example 13 | Li_{0.997}Mg_{0.001}Mn_{0.58}Fe_{0.4}V_{0.02}P_{0.999}N_{0.001}O_{3.999}F_{0.001} | 1% Li₂FeP₂O₇ | 3% LiFePO₄ | 1% carbon |
| Example 14 | Li_{0.997}Mg_{0.001}Mn_{0.65}Fe_{0.3}V_{0.05}P_{0.999}N_{0.001}O_{3.999}F_{0.001} | 1% Li₂FeP₂O₇ | 3% LiFePO₄ | 1% carbon |
| Example 15 | Li_{0.988}Mg_{0.005}Mn_{0.6}Fe_{0.35}V_{0.05}P_{0.999}S_{0.001}O_{3.999}F_{0.001} | 1% Li₂FeP₂O₇ | 3% LiFePO₄ | 1% carbon |
| Example 16 | Li_{0.984}Mg_{0.005}Mn_{0.6}Fe_{0.35}V_{0.05}P_{0.995}S_{0.005}O_{3.999}F_{0.001} | 1% Li₂FeP₂O₇ | 3% LiFePO₄ | 1% carbon |
| Example 17 | Li_{0.984}Mg_{0.005}Mn_{0.6}Fe_{0.35}V_{0.05}P_{0.999}S_{0.001}O_{3.995}F_{0.005} | 1% Li₂FeP₂O₇ | 3% LiFePO₄ | 1% carbon |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1% Li₂FeP₂O₇ | 3% LiFePO₄ | 1% carbon |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1% Li₂FeP₂O₇ | 3% LiFePO₄ | 1% carbon |
| Example 20 | Li_{0.984}Mg_{0.005}Mn_{0.75}Fe_{0.05}V_{0.05}Co_{0.15}P_{0.999}S_{0.001}O_{3.995}F_{0.005} | 1% Li₂FeP₂O₇ | 3% LiFePO₄ | 1% carbon |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1% Li₂FeP₂O₇ | 3% LiFePO₄ | 1% carbon |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 1% Li₂FeP₂O₇ | 3% LiFePO₄ | 1% carbon |
| Example 23 | Li_{0.984}Mg_{0.005}Mn_{0.7}Fe_{0.15}V_{0.05}Co_{0.10}P_{0.999}S_{0.001}O_{3.995}F_{0.005} | 1% Li₂FeP₂O₇ | 3% LiFePO₄ | 1% carbon |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1% Li₂FeP₂O₇ | 3% LiFePO₄ | 1% carbon |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1% Li₂FeP₂O₇ | 3% LiFePO₄ | 1% carbon |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 1% Li₂FeP₂O₇ | 3% LiFePO₄ | 1% carbon |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 1% Li₂FeP₂O₇ | 3% LiFePO₄ | 1% carbon |
| Example 28 | Li_{0.994}Mo_{0.001}Mn_{0.65}Fe_{0.35}P_{0.999}Si_{0.001}O_{3.999}F_{0.001} | 1% Al₄(P₂O₇)₃ | 3% LiFePO₄ | 1% carbon |
| Example 29 | Li_{0.994}Mo_{0.001}Mn_{0.65}Fe_{0.35}P_{0.999}Si_{0.001}O_{3.999}F_{0.001} | 1%Li₂NiP₂O₇ | 3% LiFePO₄ | 1% carbon |
| Example 30 | Li_{0.994}Mo_{0.001}Mn_{0.65}Fe_{0.35}P_{0.999}Si_{0.001}O_{3.999}F_{0.001} | 1% Li₂FeP₂O₇ | 3% LiCoPO₄ | 1% carbon |
| Example 31 | Li_{0.994}Mo_{0.001}Mn_{0.65}Fe_{0.35}P_{0.999}Si_{0.001}O_{3.999}F_{0.001} | 1% Li₂FeP₂O₇ | 3% LiNiPO₄ | 1% carbon |
| Example 32 | Li_{0.994}Mo_{0.001}Mn_{0.65}Fe_{0.35}P_{0.999}Si_{0.001}O_{3.999}F_{0.001} | 1% Li₂MgP₂O₇ | 3% LiFePO₄ | 1% carbon |
| Example 33 | Li_{0.994}Mo_{0.001}Mn_{0.65}Fe_{0.35}P_{0.999}Si_{0.001}O_{3.999}F_{0.001} | 1% Li₂CoP₂O₇ | 3% LiFePO₄ | 1% carbon |
| Example 34 | Li_{0.994}Mo_{0.001}Mn_{0.65}Fe_{0.35}P_{0.999}Si_{0.001}O_{3.999}F_{0.001} | 1% Li₂CuP₂O₇ | 3% LiFePO₄ | 1% carbon |
| Example 35 | Li_{0.994}Mo_{0.001}Mn_{0.65}Fe_{0.35}P_{0.999}Si_{0.001}O_{3.999}F_{0.001} | 1% Li₂ZnP₂O₇ | 3% LiFePO₄ | 1% carbon |
| Example 36 | Li_{0.994}Mo_{0.001}Mn_{0.65}Fe_{0.35}P_{0.999}Si_{0.001}O_{3.999}F_{0.001} | 1% TiP₂O₇ | 3% LiFePO₄ | 1% carbon |
| Example 37 | Li_{0.994}Mo_{0.001}Mn_{0.65}Fe_{0.35}P_{0.999}Si_{0.001}O_{3.999}F_{0.001} | 1% Ag₄P₂O₇ | 3% LiFePO₄ | 1% carbon |
| Example 38 | Li_{0.994}Mo_{0.001}Mn_{0.65}Fe_{0.35}P_{0.999}Si_{0.001}O_{3.999}F_{0.001} | 1% ZrP₂O₇ | 3% LiFePO₄ | 1% carbon |
| Example 39 | Li_{0.994}Mo_{0.001}Mn_{0.65}Fe_{0.35}P_{0.999}Si_{0.001}O_{3.999}F_{0.001} | 1% Li₂FeP₂O₇ | 3% Cu₃(PO₄)₂ | 1% carbon |
| Example 40 | Li_{0.994}Mo_{0.001}Mn_{0.65}Fe_{0.35}P_{0.999}Si_{0.001}O_{3.999}F_{0.001} | 1% Li₂FeP₂O₇ | 3% Zn₃(PO₄)₂ | 1% carbon |
| Example 41 | Li_{0.994}Mo_{0.001}Mn_{0.65}Fe_{0.35}P_{0.999}Si_{0.001}O_{3.999}F_{0.001} | 1% Li₂FeP₂O₇ | 3% Ti₃(PO₄)₄ | 1% carbon |
| Example 42 | Li_{0.994}Mo_{0.001}Mn_{0.65}Fe_{0.35}P_{0.999}Si_{0.001}O_{3.999}F_{0.001} | 1% Li₂FeP₂O₇ | 3% Ag₃PO₄ | 1% carbon |
| Example 43 | Li_{0.994}Mo_{0.001}Mn_{0.65}Fe_{0.35}P_{0.999}Si_{0.001}O_{3.999}F_{0.001} | 1% Li₂FeP₂O₇ | 3% Zr₃(PO₄)₄ | 1% carbon |
| Example 44 | Li_{0.994}Mo_{0.001}Mn_{0.65}Fe_{0.35}P_{0.999}Si_{0.001}O_{3.999}F_{0.001} | 1% Li₂FeP₂O₇ | 3% AlPO₄ | 1% carbon |
| Note: Both the first cladding layer and the second cladding layer in Examples 1 to 44 are crystalline. | | | | |

**Table 6**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | 3C charging constant current ratio (%) | Number of cycles at capacity retention of 80% @45°C | Expansion rate of battery stored at 60°C for 30 days (%) |
|---|---|---|---|---|---|---|---|---|---|
| Example 1 | 6.1 | 0.8 | 1.97 | 2.25 | 20 | 157.6 | 68.2 | 1305 | 2.1 |
| Example 2 | 6.6 | 0.4 | -1.98 | 2.45 | 5 | 159.4 | 79.1 | 1573 | 1.8 |
| Example 3 | 6.3 | 0.8 | -1.97 | 2.26 | 19 | 156.3 | 67.3 | 1367 | 2.1 |
| Example 4 | 5.3 | 0.6 | -1.97 | 2.24 | 22 | 154.7 | 66.9 | 1271 | 2.2 |
| Example 5 | 5.3 | 0.4 | -1.98 | 2.43 | 5 | 158.6 | 80.2 | 1589 | 1.6 |
| Example 6 | 2.4 | 0.3 | -1.99 | 2.50 | 7 | 160.4 | 81.1 | 1532 | 1.8 |
| Example 7 | 2.2 | 0.3 | -1.99 | 2.51 | 5 | 161.2 | 78.5 | 1490 | 1.7 |
| Example 8 | 3.3 | 0.3 | -1.99 | 2.53 | 5 | 160.1 | 78.6 | 1555 | 1.6 |
| Example 9 | 3.4 | 0.4 | -1.98 | 2.48 | 6 | 159.6 | 79.6 | 1624 | 1.7 |
| Example 10 | 3.6 | 0.3 | -1.99 | 2.52 | 4 | 160.4 | 81.5 | 1598 | 1.9 |
| Example 11 | 3.4 | 0.4 | -1.98 | 2.46 | 3 | 159.8 | 78.9 | 1612 | 1.6 |
| Example 12 | 6.8 | 0.4 | -1.98 | 2.46 | 6 | 152.1 | 76.1 | 1443 | 1.9 |
| Example 13 | 7.2 | 0.3 | -1.99 | 2.47 | 8 | 158.3 | 74.2 | 1520 | 1.7 |
| Example 14 | 7.1 | 0.5 | -1.95 | 2.60 | 7 | 154.5 | 77.2 | 1513 | 1.8 |
| Example 15 | 6.2 | 0.4 | -1.97 | 2.50 | 6 | 156.3 | 81.9 | 1427 | 1.4 |
| Example 16 | 5.3 | 0.6 | -1.96 | 2.44 | 6 | 155.9 | 81.6 | 1423 | 1.6 |
| Example 17 | 3.8 | 0.5 | -1.99 | 2.41 | 8 | 157.1 | 83.1 | 1418 | 1.7 |
| Example 18 | 2.4 | 0.3 | -1.98 | 2.47 | 5 | 159.6 | 82.5 | 1562 | 1.8 |
| Example 19 | 2.4 | 0.3 | -1.98 | 2.46 | 9 | 157.8 | 80.4 | 1569 | 1.8 |
| Example 20 | 2.5 | 0.3 | -1.95 | 2.44 | 6 | 155.3 | 82.8 | 1502 | 2.2 |
| Example 21 | 3.1 | 0.4 | -1.94 | 2.46 | 7 | 154.6 | 81.9 | 1512 | 2.2 |
| Example 22 | 3.0 | 0.4 | -1.96 | 2.47 | 5 | 158.3 | 82.1 | 1498 | 2.3 |
| Example 23 | 2.8 | 0.5 | -1.99 | 2.43 | 7 | 152.1 | 85.6 | 1385 | 1.8 |
| Example 24 | 2.4 | 0.4 | -1.97 | 2.44 | 5 | 153.1 | 79.8 | 1508 | 1.7 |
| Example 25 | 2.2 | 0.3 | -1.99 | 2.45 | 8 | 152.9 | 81.9 | 1486 | 2.1 |
| Example 26 | 3.1 | 0.5 | -1.97 | 2.23 | 5 | 152.6 | 82.3 | 1478 | 1.9 |
| Example 27 | 2.5 | 0.4 | -1.98 | 2.29 | 4 | 152 | 81.7 | 1469 | 1.4 |
| Example 28 | 6.1 | 0.9 | -1.98 | 2.49 | 25 | 159.7 | 83.2 | 1302 | 1.9 |
| Example 29 | 6.1 | 0.8 | -1.98 | 2.26 | 25 | 153.9 | 66.3 | 1289 | 2.0 |
| Example 30 | 6.1 | 0.7 | -1.97 | 2.29 | 26 | 154.3 | 66.5 | 1274 | 2.1 |
| Example 31 | 6.2 | 0.8 | -1.98 | 2.28 | 25 | 154.8 | 66.6 | 1264 | 2.2 |
| Example 32 | 6.1 | 0.7 | -1.98 | 2.32 | 26 | 156.2 | 64.6 | 1274 | 2.2 |
| Example 33 | 6.1 | 0.7 | -1.98 | 2.29 | 24 | 155.8 | 63.9 | 1323 | 2.1 |
| Example 34 | 6.0 | 0.8 | -1.97 | 2.31 | 27 | 155.5 | 66.3 | 1297 | 2.0 |
| Example 35 | 6.1 | 0.9 | -1.98 | 2.28 | 25 | 154.3 | 67.4 | 1345 | 2.1 |
| Example 36 | 6.2 | 0.9 | -1.98 | 2.30 | 25 | 155.2 | 64.6 | 1391 | 2.2 |
| Example 37 | 6.2 | 0.8 | -1.98 | 2.31 | 26 | 156.0 | 65.2 | 1384 | 2.2 |
| Example 38 | 6.1 | 0.7 | -1.97 | 2.29 | 24 | 153.4 | 65.5 | 1321 | 2.0 |
| Example 39 | 6.0 | 0.9 | -1.98 | 2.33 | 26 | 153.4 | 64.5 | 1310 | 2.0 |
| Example 40 | 6.1 | 0.9 | -1.97 | 2.28 | 25 | 154.6 | 65.1 | 1280 | 2.0 |
| Example 41 | 6.1 | 0.8 | -1.98 | 2.31 | 26 | 154.7 | 63.6 | 1292 | 2.1 |
| Example 42 | 6.2 | 0.7 | -1.98 | 2.31 | 23 | 155.0 | 67.6 | 1340 | 2.1 |
| Example 43 | 6.1 | 0.7 | -1.98 | 2.29 | 22 | 156.3 | 63.1 | 1293 | 2.2 |
| Example 44 | 6.1 | 0.8 | -1.97 | 2.30 | 27 | 155.4 | 63.6 | 1321 | 2.3 |

It can be seen from tables 4 and 6 that, lithium manganese phosphate is modifed by simultaneously doping specific elements at the Li, Mn, P, and O sites of LiMnPO₄ with specific amounts, and multilayer coated, the obtained positive electrode active material achieves smaller lattice change rate, smaller Li/Mn anti-site defect concentration, larger compaction density, surface oxygen valence closer to - 2 valence, and less leaching out of Mn and Fe after cycling, so that the battery of the present application has better performance, such as higher capacity, better high-temperature storage performance and high-temperature cycling performance.

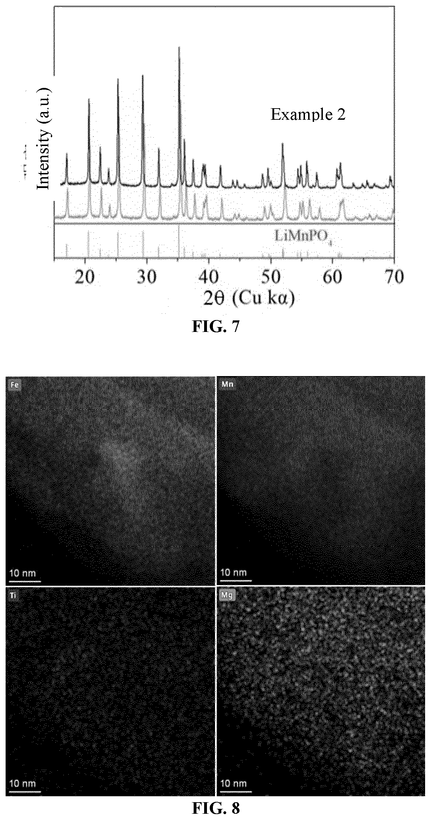

Fig. 7 illustrates an X-ray diffraction (XRD) of the undoped LiMnPO₄ and a core of the positive electrode active material prepared in Example 2. As can be seen from Fig. 7, the core of of the positive electrode active material prepared in Example 2 has basically same primary characteristic peaks at position to undoped LiMnPO₄, indicating that the core of the doped lithium manganese phosphate positive electrode active material has no impurity phase and the improvement of performances is mainly caused by doping of elements rather than by an impurity phase. Fig. 8 illustrates an X-ray energy dispersive spectroscopy (EDS) of a core of the positive electrode active material prepared in Example 2. The dotted distribution in Fig. 8 represents each doped elements. It can be seen from Fig. 8 that the element doping is uniform in the core of positive electrode active material prepared in Example 2.

It is also seen from Examples 12-27 that, with the same other elements, (1-y):y in the range of 1 to 4 and m:x in the range of 9 to 1100, optionally, (1-y):y in the range of 1.5 to 3 and m:x in the range of 190 to 998 can further improve the energy density and cycling performance of the battery.

Table 7 shows the interplanar spacings and angles of the first cladding layers and the second cladding layers in examples 32 to 44.

**Table 7**

| No. | Interplanar spacing of first cladding layer (nm) | crystal orientation (111) angle of first cladding layer materia (°) | Interplanar spacing of second cladding layer (nm) | crystal orientation (111) angle of second cladding layer materia (°) |
|---|---|---|---|---|
| Example 1 | 0.303 | 29.496 | 0.348 | 25.562 |
| Example 32 | 0.451 | 19.668 | 0.348 | 25.562 |
| Example 33 | 0.297 | 30.846 | 0.348 | 25.562 |
| Example 34 | 0.457 | 19.456 | 0.348 | 25.562 |
| Example 35 | 0.437 | 20.257 | 0.348 | 25.562 |
| Example 36 | 0.462 | 19.211 | 0.348 | 25.562 |
| Example 37 | 0.45 | 19.735 | 0.348 | 25.562 |
| Example 38 | 0.372 | 23.893 | 0.348 | 25.562 |
| Example 39 | 0.303 | 29.496 | 0.374 | 23.789 |
| Example 40 | 0.303 | 29.496 | 0.36 | 24.71 |
| Example 41 | 0.303 | 29.496 | 0.35 | 25.428 |
| Example 42 | 0.303 | 29.496 | 0.425 | 20.885 |
| Example 43 | 0.303 | 29.496 | 0.356 | 24.993 |
| Example 44 | 0.303 | 29.496 | 0.244 | 36.808 |

As can be seen from Table 7, the interplanar spacings and angles of the first cladding layers and the second cladding layers of the present application were within the range described in the present application. Combined with the table 6, it can be seen that the use of the first cladding layer and the second cladding layer similarly yielded positive electrode active materials with good performance and achieved good battery performance results.

Table 8 shows the compositions of the positive electrode active materials in Examples 45-59.

Table 9 shows performance data of the positive electrode active materials, the positive electrode plates, the button batteries or full batteries in Examples 45-59 measured in accordance with the above performance test methods.

**Table 8**

| No. | Core | First cladding layer | Second cladding laver | Third cladding laver |
|---|---|---|---|---|
| Example 45 | Li_{0.994}Mo_{0.001}Mn_{0.65}Fe_{0.35}P_{0.999}Si_{0.001}O_{3.999}F_{0.001} | 2% Li₂FeP₂O₇ | 3% LiFePO4 | 1% carbon |
| Example 46 | Li_{0.994}Mo_{0.001}Mn_{0.65}Fe_{0.35}P_{0.999}Si_{0.001}O_{3.999}F_{0.001} | 3% Li₂FeP₂O₇ | 3% LiFePO4 | 1% carbon |
| Example 47 | Li_{0.994}Mo_{0.001}Mn_{0.65}Fe_{0.35}P_{0.999}Si_{0.001}O_{3.999}F_{0.001} | 4% Li₂FeP₂O₇ | 3% LiFePO4 | 1% carbon |
| Example 48 | Li_{0.994}Mo_{0.001}Mn_{0.65}Fe_{0.35}P_{0.999}Si_{0.001}O_{3.999}F_{0.001} | 5.5% Li₂FeP₂O₇ | 3% LiFePO4 | 1% carbon |
| Example 49 | Li_{0.994}Mo_{0.001}Mn_{0.65}Fe_{0.35}P_{0.999}Si_{0.001}O_{3.999}F_{0.001} | 6% Li₂FeP₂O₇ | 3% LiFePO4 | 1% carbon |
| Example 50 | Li_{0.994}Mo_{0.001}Mn_{0.65}Fe_{0.35}P_{0.999}Si_{0.001}O_{3.999}F_{0.001} | 1% Li₂FeP₂O₇ | 1% LiFePO4 | 1% carbon |
| Example 51 | Li_{0.994}Mo_{0.001}Mn_{0.65}Fe_{0.35}P_{0.999}Si_{0.001}O_{3.999}F_{0.001} | 1% Li₂FeP₂O₇ | 2% LiFePO4 | 1% carbon |
| Example 52 | Li_{0.994}Mo_{0.001}Mn_{0.65}Fe_{0.35}P_{0.999}Si_{0.001}O_{3.999}F_{0.001} | 1% Li₂FeP₂O₇ | 4% LiFePO4 | 1% carbon |
| Example 53 | Li_{0.994}Mo_{0.001}Mn_{0.65}Fe_{0.35}P_{0.999}Si_{0.001}O_{3.999}F_{0.001} | 1% Li₂FeP₂O₇ | 5.5% LiFePO4 | 1% carbon |
| Example 54 | Li_{0.994}Mo_{0.001}Mn_{0.65}Fe_{0.35}P_{0.999}Si_{0.001}O_{3.999}F_{0.001} | 1% Li₂FeP₂O₇ | 6% LiFePO4 | 1% carbon |
| Example 55 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO4 | 2% carbon |
| Example 56 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO4 | 3% carbon |
| Example 57 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO4 | 4% carbon |
| Example 58 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO4 | 5.5% carbon |
| Example 59 | Li_{0.994}Mo_{0.001}Mn_{0.65}Fe_{0.35}P_{0.999}Si_{0.001}O_{3.999}F_{0.001} | 1% Li₂FeP₂O₇ | 3% LiFePO4 | 6% carbon |

**Table 9**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | 3C charging constant current ratio (%) | Number of cycles at capacity retention of 80% @45°C | Expansion rate of battery stored at 60°C for 30 days (%) |
|---|---|---|---|---|---|---|---|---|---|
| Example 45 | 6.1 | 0.9 | -1.98 | 2.28 | 15 | 157.1 | 66.3 | 1458 | 2 |
| Example 46 | 6.1 | 0.9 | -1.99 | 2.26 | 12 | 156.5 | 64.2 | 1568 | 1.8 |
| Example 47 | 6.1 | 0.8 | -1.98 | 2.28 | 10 | 155.9 | 62.8 | 1685 | 1.6 |
| Example 48 | 6.0 | 0.9 | -1.97 | 2.25 | 5 | 153.3 | 61.5 | 1775 | 1.4 |
| Example 49 | 6.0 | 0.8 | -1.97 | 2.24 | 5 | 153.0 | 60.2 | 1952 | 1.2 |
| Example 50 | 6.1 | 1 | -1.98 | 2.25 | 24 | 154.2 | 64.5 | 1126 | 3.1 |
| Example 51 | 6.1 | 1 | -1.96 | 2.26 | 21 | 156.2 | 66.8 | 1456 | 2.5 |
| Example 52 | 6.1 | 0.9 | -1.99 | 2.25 | 19 | 155.4 | 70.5 | 1546 | 1.8 |
| Example 53 | 6.1 | 0.8 | -1.97 | 2.24 | 17 | 153.1 | 72.5 | 1675 | 1.5 |
| Example 54 | 6.0 | 0.7 | -1.98 | 2.27 | 16 | 152.3 | 76.8 | 1787 | 1.2 |
| Example 55 | 6.1 | 0.8 | -1.98 | 2.25 | 18 | 159.3 | 70.5 | 1310 | 1.9 |
| Example 56 | 6.1 | 0.7 | -1.96 | 2.24 | 15 | 161.2 | 74.6 | 1317 | 1.9 |
| Example 57 | 6.1 | 0.7 | -1.98 | 2.24 | 12 | 159.8 | 80.4 | 1328 | 1.9 |
| Example 58 | 6.2 | 0.9 | -1.97 | 2.21 | 10 | 157.3 | 84.2 | 1345 | 1.8 |
| Example 59 | 6.2 | 1 | -1.98 | 2.22 | 9 | 156.6 | 86.5 | 1284 | 1.8 |

It can be seen from Table 9, the cladding amount of the cladding layer within a suitable range allows improved performance of the positive electrode active material and the battery.

Table 10 shows performance data of the positive electrode active materials, the positive electrode plates, the button batteries or full batteries in Examples 60-62 measured in accordance with the above performance test methods.

**Table 10**

| No. | Crystallinity of pyrophosph ate and phosphate | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | 3C charging constant current ratio (%) | Number of cycles at capacity retention of 80% @45 °C | Expansion rate of battery stored at 60°C for 30 days (%) |
|---|---|---|---|---|---|---|---|---|---|---|
| Example 1 | 100% | 6.1 | 0.8 | -1.97 | 2.25 | 20 | 157.6 | 68.2 | 1305 | 2.1 |
| Example 60 | 30% | 7.7 | 1.1 | -1.98 | 2.22 | 81 | 153.2 | 65.2 | 1185 | 3.1 |
| Example 61 | 50% | 7.2 | 1.0 | -1.97 | 2.22 | 53 | 155.4 | 67.4 | 1252 | 2.4 |
| Example 62 | 70% | 6.7 | 0.9 | -1.99 | 2.24 | 32 | 156.2 | 67.8 | 1275 | 2.2 |

It can be seen from Table 10, with the gradual increase in crystallinity of pyrophosphate and phosphate, the lattice change rate, Li/Mn anti-site defect concentration, and leaching out of Fe and Mn after cycling of the corresponding positive electrode active material are gradually decreased, and the capacity of the battery is gradually increased, and the high-temperature cycling performance and the high-temperature storage performance are also gradually improved.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

1. A positive electrode active material having a core-shell structure, comprising a core and a shell cladding the core,
wherein the core has a chemical formula of LiₘAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
the shell comprises a first cladding layer cladding the core, a second cladding layer cladding the first cladding layer and a third cladding layer cladding the second cladding layer,
wherein the first cladding layer comprises crystalline pyrophosphates LiₐMP₂O₇ and/or M_{b}(P₂O₇)_{c}, 0 ≤ a ≤ 2, 1 ≤ b ≤ 4, 1 ≤ c ≤ 6, wherein the values of a, b and c satisfy the condition that the crystalline pyrophosphate LiₐMP₂O₇ or M_{b}(P₂O₇)_{c} is electrically neutral; wherein each M in the crystalline pyrophosphates LiₐMP₂O₇ and/or M_{b}(P₂O₇)_{c} is independently one or more elements selected from Fe, Ni, Mg, Co, Cu, Zn, Ti, Ag, Zr, Nb, and Al;
wherein the second cladding layer comprises crystalline phosphate XPO₄, X being one or more elements selected from Li, Fe, Ni, Mg, Co, Cu, Zn, Ti, Ag, Zr, Nb and Al;
and wherein the third cladding layer is carbon.

2. The positive electrode active material according to claim 1, wherein the crystalline pyrophosphate in the first cladding layer has an interplanar spacing ranging from 0.293 nm to 0.470 nm, and a crystal orientation (111) angle ranging from 18.00° to 32.00°; and
the crystalline phosphate in the second cladding layer has an interplanar spacing ranging from 0.244 nm to 0.425 nm, and a crystal orientation (111) angle ranging from 20.00° to 37.00°.

3. The positive electrode active material according to any one of claims 1 to 2, wherein in the core, x is selected from a range of 0.001 to 0.005; and/or,
y is selected from a range of 0.01 to 0.5, optionally from 0.25 to 0.5; and/or,
z is selected from a range of 0.001 to 0.005; and/or,
n is selected from a range of 0.001 to 0.005.

4. The positive electrode active material according to any one of claims 1 to 3, wherein in the core, (1-*y*):*y* is from 1 to 4, optionally from 1.5 to 3, and m:x is from 9 to 1100, optionally from 190 to 998.

5. The positive electrode active material according to any one of claims 1 to 4, wherein the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0.

6. The positive electrode active material according to any one of claims 1 to 5, wherein the first cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core; and/or
the second cladding layer has a cladding amount of greater than 0 and less than or equal to 6 wt%, optionally greater than 0 and less than or equal to 5.5 wt%, and more optionally between 2 wt% and 4 wt%, based on the weight of the core; and/or
the third cladding layer has a cladding amount of greater than 0 and less than or equal to 6 wt%, optionally greater than 0 and less than or equal to 5.5 wt%, more optionally greater than 0 and less than or equal to 2 wt%, based on the weight of the core.

7. The positive electrode active material according to any one of claims 1 to 6, wherein
the first cladding layer has a thickness of 1 nm to 10 nm; and/or
the second cladding layer has a thickness of 2 nm to 15 nm; and/or
the third cladding layer has a thickness of 2 nm to 25 nm.

8. The positive electrode active material according to any one of claims 1 to 7, wherein
manganese is present in a content of 10 wt% to 35 wt%, optionally in the range of 15 wt% to 30 wt%, and more optionally in the range of 17 wt% to 20 wt%, and phosphorus is present in a content of 12 wt% to 25 wt%, optionally in the range of 15 wt% to 20 wt%, the based on the weight of the positive electrode active material; the weight ratio of manganese to phosphorus is in the range of 0.90 to 1.25, optionally in the range of 0.95 to 1.20.

9. The positive electrode active material according to any one of claims 1 to 8, wherein each of A, C and D is independently any one element in the respective range, and B is at least two elements in its range;
optionally,
A is any one element selected from Mg and Nb, and/or
B is at least two elements selected from Fe, Ti, V, Co and Mg, optionally a combination of Fe with one or more element selected from Ti, V, Co and Mg, and/or
C is S, and/or
D is F.

10. The positive electrode active material according to any one of claims 1 to 9, wherein the positive electrode active material satisfies at least one of the following (1) to (4):
(1) before and after complete de-intercalation and intercalation of lithium, the positive electrode active material has a lattice change rate of 8% or less, optionally 6% or less, more optionally 4% or less;
(2) the positive electrode active material has a Li/Mn anti-site defect concentration of 4% or less, optionally 2% or less, more optionally 1% or less;
(3) the positive electrode active material has a compaction density of 2.2 g/cm³ or more, optionally 2.2 g/cm³ or more and 2.8 g/cm³ or less, at 3T; and
(4) the positive electrode active material has a surface oxygen valence of -1.90 or less, optionally - 1.90 to -1.99.

11. A method for preparing a positive electrode active material, comprising the following steps:
step of providing a core material having a chemical formula of LiₘAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, m is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of cladding: providing a suspension of LiₐMP₂O₇ and/or M_{b}(P₂O₇)_{c} and providing a suspension of XPO₄, adding the core material to the suspensions and mixing them, and obtaining the positive electrode active material by sintering, wherein 0 ≤ a ≤ 2, 1 ≤ b ≤ 4, 1 ≤ c ≤ 6, and the values of a, b and c satisfy the condition that the crystalline pyrophosphate LiₐMP₂O₇ or M_{b}(P₂O₇)_{c} is electrically neutral, and wherein each M is independently one or more elements selected from Fe, Ni, Mg, Co, Cu, Zn, Ti, Ag, Zr, Nb, and Al; and X is one or more elements selected from Li, Fe, Ni, Mg, Co, Cu, Zn, Ti, Ag, Zr, Nb and Al,
wherein the positive electrode active material has a core-shell structure comprising a core and a shell cladding the core, in which the shell comprises a first cladding layer cladding the core, a second cladding layer cladding the first cladding layer and a third cladding layer cladding the second cladding layer, and in which the first cladding layer comprises crystalline pyrophosphates LiₐMP₂O₇ and/or M_{b}(P₂O₇)_{c}, the second cladding layer comprises crystalline phosphate XPO₄, and the third cladding layer is carbon.

12. The method according to claim 11, wherein the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₘAₓMn_{1-y}B_{y}P_{1-z}C_{z}O₄₋ₙDₙ.

13. The method according to claim 12, wherein
the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D.

14. The method according to claim 12 or 13, wherein
the stirring in the step (1) is carried out at a temperature in a range of 60-120°C, and/or
the stirring in the step (1) is carried out by stirring at a rate of 200-800 rpm, and/or
grinding and mixing in the step (2) are carried out for 8-15 hours, and/or
the sintering in the step (4) is carried out at a temperature in a range of 600-900°C for 6-14 hours.

15. The method according to any one of claims 11 to 14, wherein the cladding step comprises:
a first cladding step: dissolving a source of element M, a phosphorus source and an acid, and optionally a source of lithium, in a solvent to obtain a suspension of first cladding layer material;
sufficiently mixing the core obtained in the step of providing a core material with the suspension of a first cladding layer material obtained in the first cladding step, drying, and sintering to obtain a material clad with the first cladding layer;
a second cladding step: dissolving a source of element X, a phosphorus source and an acid in a solvent to obtain a suspension of a second cladding layer material; sufficiently mixing the material clad with the first cladding layer obtained in the first cladding step with the suspension of a second cladding layer material obtained in the second cladding step, drying, and sintering to obtain a material clad with two cladding layers; and
a third cladding step: dissolving a carbon source in a solvent and fully dissolving it to obtain a solution of a third cladding layer material; then adding the material clad with two cladding layers obtained in the second cladding step to the solution of a third cladding layer, mixing homogeneously, drying and then sintering to obtain a material clad with three cladding layers, i.e., a positive electrode active material.

16. The method according to claim 15, wherein
in the first cladding step the pH of a solution with a source of elemental M, a phosphorus source and an acid, and optionally a lithium source dissolved, is controlled to be 3.5 to 6.5, and then stirred and reacted for 1 to 5 hours, and then the solution is warmed to 50°C to 120°C and maintained at that temperature for 2 to 10 hours; and/or
sintering in the first cladding step is carried out at 650°C to 800°C for 2 to 6 hours; and/or
in the second cladding step a source of element X, a phosphorus source and an acid are dissolved in a solvent and then stirred and reacted for 1 to 10 hours, and then the resulting solution is warmed to 60°C to 150°C and maintained at that temperature for 2 to 10 hours; and/or
the sintering in the second cladding step is carried out at 500°C to 700°C for 6 to 10 hours; and/or
the sintering in the third cladding step is carried out at 700°C to 800°C for 6 to 10 hours.

17. A positive electrode plate comprising a positive electrode current collector and a positive electrode film layer provided on at least one surface of the positive electrode current collector, wherein the positive electrode film layer comprises the positive electrode active material according to any one of claims 1 to 10 or the positive electrode active material prepared by the method according to any one of claims 11 to 16, and the positive electrode active material is present in the positive electrode film layer in a content of 90 wt% to 99.5 wt%, optionally 95 wt% to 99.5 wt%, based on total weight of the positive electrode film layer.

18. A secondary battery comprising the positive electrode active material according to any one of claims 1 to 10, or the positive electrode active material prepared by the method according to any one of claims 11 to 16, or the positive electrode plate according to claim 17.

19. An electrical device comprising the secondary battery according to claim 18.
